# EUROPEAN PATENT SPECIFICATION

(11) **EP 1 881 028 B1**
(45) Date of publication and mention of the grant of the patent: **12.10.2011**
(21) Application number: 06745623.6
(22) Date of filing: 24.04.2006
(51) Int. Cl.: C08L 27/18, C08K 5/16, C08K 5/18

(54) **CROSSLINKABLE POLYTETRAFLUOROETHYLENE COMPOSITION, CROSS- LINKED POLYTETRAFLUOROETHYLENE POWDER, POLYTETRAFLUORO- ETHYLENE MOLDINGS, RESIN BLEND COMPOSITIONS, AND RESIN BLEND MOLDINGS**
VERNETZBARE POLYTETRAFLUORETHYLENZUSAMMENSETZUNG, VERNETZTES POLYTETRAFLUORETHYLENPULVER, POLYTETRAFLUORETHYLENFORMKÖRPER, HARZMISCHUNGSZUSAMMENSETZUNGEN UND HARZMISCHUNGSFORMKÖRPER
COMPOSITION DE POLYTETRAFLUORETHYLENE RETICULABLE, POUDRE DE POLYTETRAFLUORETHYLENE RETICULABLE, MOULAGES EN POLYTETRAFLUORETHYLENE, COMPOSITIONS DE MELANGE DE RESINES ET MOULAGES EN MELANGE DE RESINES

(30) Priority: 02.05.2005 JP 2005134020; 12.08.2005 JP 2005233919
(43) Date of publication of application: 23.01.2008
(73) Proprietor: DAIKIN INDUSTRIES, LTD., Osaka-shi, Osaka 530-8323 (JP)
(72) Inventor: NANBA, Yoshinori c/o Daikin Industries, Ltd., Settsu-shi, Osaka; 5668585 (JP); KOH, Meiten c/o Daikin Industries, Ltd., Settsu-shi, Osaka; 5668585 (JP); SAWADA, Yasuhiko c/o Daikin Industries, Ltd., Settsu-shi, Osaka; 5668585 (JP)
(74) Representative: Goddar, Heinz J.
(86) International application number: PCT/JP2006/308545
(87) International publication number: WO 2006/120882

(56) References cited:
- EP-A- 0 727 413
- WO-A-2005/097890
- WO-A-2006/057666
- WO-A1-01/53411
- DE-A1- 10 004 152
- JP-A- 08 120 144
- JP-A- 2000 290 454
- JP-A- 2002 003 677
- JP-A- 2002 012 727
- JP-A- 2002 293 831
- JP-A- 2003 026 883
- JP-A- 2003 531 222
- US-A- 4 525 539
- US-A1- 2002 061 977

## Description

### TECHNICAL FIELD

The present invention relates to a polytetrafluoroethylene composition of matter that can form a crosslinked structure and a polytetrafluoroethylene resin that possesses a crosslinked structure. Moreover, the present invention also relates to a resin blend composition of matter including a polytetrafluoroethylene composition of matter or a polytetrafluoroethylene resin that possesses a crosslinked structure. In addition, the present invention relates to a resin blend molded body that is obtained from a resin blend composition of matter.

### BACKGROUND ART

Polytetrafluoroethylene (abbreviated below as PTFE) resin has superior chemical resistance, frictional resistance, weather resistance, electrical insulation properties, flame retardant properties and the like, and is used widely for sliding materials, flame retardant additives, low-dielectric-constant film materials and the like. However, there are problems with PTFE resins such as significant wear and creep under sliding conditions or under compression conditions at high temperatures. For this reason, it would be desirable to improve further the wear characteristics and creep characteristics and the like of PTFE resins in the industrial arena. As a means to solve this problem, methods such as "formulating PTFE resins with additives" and "crosslinking PTFE resins by irradiating the PTFE resin with ionizing radiation (for example, see Patent Documents 1 and 2)" are widely known to those skilled in the art. Moreover, other methods have been reported such as "crosslinking PTFE resins through thermal treatment of the PTFE resin to introduce carboxyl groups (for example, see Patent Document 3)", "mixing of fluorinated pitch with PTFE resin followed by crosslinking of the PTFE resin by heating or by irradiating with ionizing radiation (for example, see Patent Document 4)", and "formulating PTFE resin to a specific surface area of 1.0∼2.0 m²/g of carbon fibers(for example, see Patent Document 5)", or the like.
<Patent Document 1>
   Japanese Published Unexamined Patent Application No. H7-118423 (1995)
<Patent Document 2>
   Japanese Published Unexamined Patent Application No. 2001-329069
<Patent Document 3>
   Japanese Published Unexamined Patent Application No. H3-234753 (1991)
<Patent Document 4>
   Japanese Published Unexamined Patent Application No. 2003-119293
<Patent Document 5>
   Japanese Published Unexamined Patent Application No. 2003-41083

### DISCLOSURE OF THE INVENTION

### PROBLEM TO BE SOLVED BY THE INVENTION

Nevertheless, in the "formulation with additives or carbon fibers" methods, there are concerns that anisotropy will be generated in the various physical properties of the PTFE resin molded body and that a deleterious effect will be exerted on the surface characteristics (such as low frictional properties) of the PTFE resin. In addition, it is reported that the PTFE resin obtained according to the "PTFE resin crosslinked by irradiation with ionizing radiation" method possesses low frictional properties, but there is another problem in the observations of reduced strength and reduced crystallinity in a PTFE resin molded body obtained by this method that are caused by cleavage of the PTFE main chains due to the ionizing radiation, and also problems that are attributed the heterogeneity of the crosslinks from the crosslinking by ionizing radiation that are due to the amorphous regions undergo crosslinking first. Moreover, this method requires a heat treatment of the PTFE molded body under high temperatures that are above the melting point of PTFE, and in addition requires maintaining a precise temperature ±20 °C, preferably 5 °C, and furthermore requires that the heat treatment be carried under low oxygen concentrations in order to obtain a satisfactory crosslinking efficiency. For these reasons, there are problems with the inevitably expensive equipment that is required to employ this method. Additionally, in manufacturing the equipment for this method, due to the difficulties in uniformly irradiating the PTFE molded body with ionizing radiation, problems are introduced by the heterogeneous production of crosslinks in the case of powders, and problems with the generation of wrinkles in the case of film. Furthermore, when the crosslinks are due to heat, the performance enhancement effect is limited. Moreover, in the "crosslinking of PTFE through the use of fluorinated pitch" method, there are problems with the generation of harmful HF gas and F₂ gas during the crosslinking reaction. Furthermore, in the compression molding of the crosslinked PTFE powders obtained as described above, as shown in Japanese Published Unexamined Patent Application No. 2001-240682, and Japanese Published Unexamined Patent Application No. 2002-114883, there is a problem with the requirement that un-crosslinked PTFE must be mixed in because of the difficulties when the compression molding is carried out on the crosslinked PTFE powder alone, and problems are present such as with the difficulties in compression molding when the crosslinked PTFE percentage content is increased, and with the deleterious effect on productivity due to the necessity of using the hot coining method with the pressurized cooling from a temperature above the melting point during compression molding.

The subject of the present invention is to offer a PTFE resin that can be formed by common molding methods such as compression molding without the necessity for expensive equipment or hot coining methods that are deleterious to productivity, and where harmful substances are not generated during manufacture, and conventional strength, crystallinity and surface characteristics are preserved, and where there is neither anisotropy nor heterogeneity, and where the PTFE resin is more difficult to deform than conventional PTFE resin.

### <Means to Solve the Problem>

A crosslinkable polytetrafluoroethylene composition of matter that relates to the present invention contains polytetrafluoroethylene and a crosslinking agent. The polytetrafluoroethylene possesses at least one reactive functional group selected from the group consisting of cyano (-CN), carboxyl (-COOH), alkoxycarbonyl (-COOR (where R is a monovalent organic group)) and acid halide (-COX (where X is a halogen atom)) on at least one of the main chain and side chain terminal ends. The crosslinking agent reacts with one or a plurality of reactive functional groups and can form a cyclic structure.

For the aforementioned crosslinking agent, a preferred crosslinking agent is at least one type of crosslinking agent selected from the group consisting of amidoxime crosslinking agents, amidrazone crosslinking agents, aminophenol crosslinking agents, aminothiophenol crosslinking agents and aminophenyl crosslinking agents.

Moreover, for the aforementioned crosslinking agent, a more preferred crosslinking agent is at least one type of crosslinking agent selected from the group consisting of compounds that contain at least two of the crosslinking reactive groups shown in Generic Formula (1), compounds as shown in Generic Formula (2), (3) and (4).

### <Structure 1>

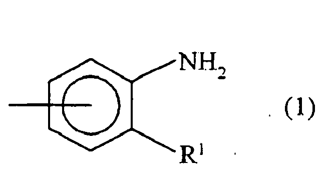

(where in the formula, whether R¹ is the same or different, can be -NH₂,-NHR², -OH or -SH, and R² is a fluorine atom or a monovalent organic group)

### <Structure 2>

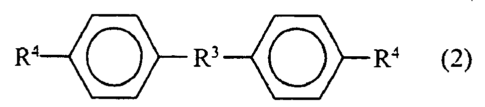

(where in the formula, R³ is an -SO₂-, -O-, -CO-, an alkylene group with from 1 to 6 carbon atoms, a perfluoroalkylene group with from 1 to 10 carbon atoms, or a single bond, and R⁴ is

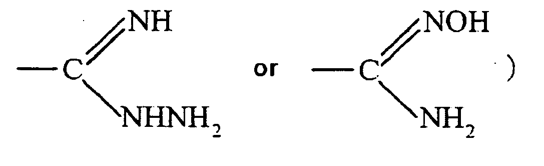

### <Structure 3>

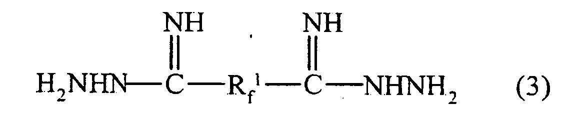

(where in the formula, R_{f}¹ is a perfluoroalkylene group with from 1 to 10 carbon atoms)

### <Structure 4>

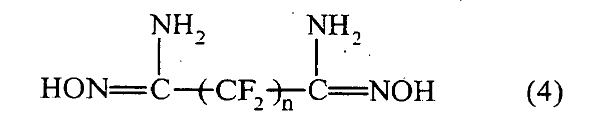

(where in the formula, n is an integer from 1 to 10)

Additionally, the aforementioned crosslinking agent can also be a compound as shown in Generic Formula (5)

### <Structure 5>

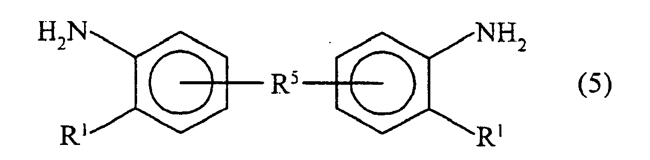

(where in the formula, R¹ is the same as the aforementioned R¹, R⁵ is -SO₂-, -O-. -CO-, an alkylene group with from 1 to 6 carbon atoms, a perfluoroalkylene group with from 1 to 10 carbon atoms, or a single bond, or the group depicted as

### <Structure 6>

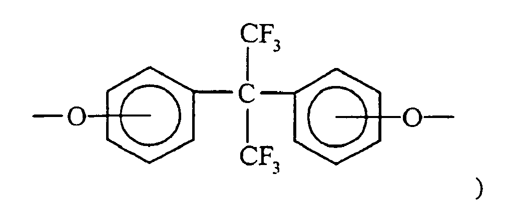

Then, if the aforementioned crosslinkable polytetrafluoroethylene composition of matter is heated and undergoes a crosslinking reaction, it is possible to obtain the polytetrafluoroethylene molded body or the powdered polytetrafluoroethylene crosslinked body that are the objects of the present application.

In addition, it is also possible to obtain the polytetrafluoroethylene molded body that is the object of the present application through compression molding, ram extrusion molding, or paste extrusion molding, of the abovementioned powdered polytetrafluoroethylene crosslinked body.

Furthermore, the aforementioned crosslinkable polytetrafluoroethylene composition of matter and the powdered polytetrafluoroethylene crosslinked body can be dispersed in or blended with another resin or a resin precursor for a molding resin or elastomer as a modifying material. As to the method for obtaining such a blend molded body, examples of methods that can be named include the mixture of the aforementioned crosslinkable polytetrafluoroethylene composition of matter and a resin or a resin precursor being hot molded, or a mixture of the aforementioned powdered polytetrafluoroethylene crosslinked body with a resin or a resin precursor being molded. Furthermore, in the former method, a crosslinking agent within the crosslinkable polytetrafluoroethylene composition of matter can react with the polytetrafluoroethylene to form a crosslinked structure. Furthermore, examples that can be named of what is referred to here as "resin" include polyethylene resins, polypropylene resins, ethylene-vinyl acetate copolymer resins, ethylene-ethyl acrylate copolymer resins, ethylene-vinyl alcohol copolymer resins, poly(cycloolefin) resins, poly(isobutylene) resins, polyolefin resins, poly(methylpentene) resins, poly(vinyl chloride) resins, polystyrene resins, acrylonitrile-styrene copolymer resins (AS resins), styrene-methyl methacrylate copolymer resins, acrylonitrile-butylene-styrene copolymer resins (ABS resins), acrylonitrile-acrylate-styrene copolymer resins (AAS resins), acrylonitrile-ethylene-propylene-diene rubber-styrene copolymer resins (AES resins), acrylonitrile-styrene-acrylate copolymer resins (ASA resins), silicone-acrylonitrile -styrene copolymer resins (SAS resins), acrylic resins, methacrylic resins, polyamide resins, polycarbonate resins, polyacetal resins, modified poly(phenylene ether) resins, poly(butylene terephthalate) resins, poly(ethylene terephthalate) resins, poly(ethylene naphthalate) resins, poly(phenylene sulfide) resins, polysulfone resins, fluororesins, poly(ether sulfone) resins, poly(ether imide) resins, poly(ether ketone) resins, poly(ether ether ketone) resins, polyimide resins, polyarylate resins, silicone resins, poly(lactic acid) resins, polyurethane resins, polyester resins, aromatic poly(ester amide) resins, aromatic azomethine resins, poly(arylene sulfide) resins, polyketone resins, poly(amide-imide) resins and poly(ether nitrile) resins. Moreover, the fluororesins here include polytetrafluoroethylene, tetrafluoroethylene-hexafluoropropylene copolymers, tetrafluoroethylene-perfluoroalkyl vinyl ether copolymers and poly(chlorotrifluoroethylene). In addition, examples that can be named of what is referred to here as "resin precursor" include epoxy resins, phenolic resins, urea resins, melamine resins, unsaturated polyester resins, alkyd resins, and diaryl phthalate resins, as liquids before curing, solutions, solid powders.

### EFFECT OF THE INVENTION

If a crosslinkable polytetrafluoroethylene composition of matter of the present invention undergoes a crosslinking reaction, it is possible to offer polytetrafluoroethylene resins that maintain conventional strength, crystallinity and surface characteristics , and where there is neither anisotropy nor heterogeneity, and where the polytetrafluoroethylene resin is more difficult to deform than conventional polytetrafluoroethylene resin. Additionally, in carrying out this crosslinking reaction, there is no requirement for expensive equipment or a hot coining method that is deleterious to productivity, and conventional molding methods such as compression molding are sufficient. Moreover, no hazardous substances are produced in the crosslinking reaction.

In addition, not only can the aforementioned crosslinkable polytetrafluoroethylene composition of matter and the powdered polytetrafluoroethylene crosslinked body be molded by themselves, but for example polytetrafluoroethylene can be combined with other fluororesins and can be molded at high weight ratios. Furthermore, in the case of compression molding, the aforementioned crosslinkable polytetrafluoroethylene composition of matter and the powdered polytetrafluoroethylene crosslinked body have the characteristics from being able to be molded by the free baking method. Thus, the molded body obtainable in this way maintains conventional surface characteristics without anisotropy and becomes more difficult to deform than conventional polytetrafluoroethylene resin.

Furthermore, the crosslinkable polytetrafluoroethylene composition of matter or powdered polytetrafluoroethylene crosslinked body that relate to the present invention can be dispersed in or blended as a modifying material in another material such as a molding resin or elastomer to improve the flame retardant properties, non-adhesive properties, sliding characteristics, water/oil repellency, electrical characteristics, resistance to stains, corrosion resistance, and weather resistance.

### BEST MODE FOR IMPLEMENTING THE INVENTION

### <Crosslinkable polytetrafluoroethylene composition of matter>

A crosslinkable polytetrafluoroethylene composition of matter that relates to an embodiment of the present invention contains polytetrafluoroethylene and a crosslinking agent. The respective explanations of the polytetrafluoroethylene and crosslinking agent employed in the present embodiment are found below. Furthermore, polytetrafluoroethylene is abbreviated as PTFE below.

### <PTFE>

For the PTFE related to this embodiment, examples of the crosslinking sites that can react with the crosslinking agent that can be named include cyano groups (-CN), carboxyl groups (-COOH), alkoxycarbonyl groups (-COOR⁷ (R⁷ is a monovalent organic group)) and acid halide groups (-COX (where X is a halogen atom)), and these are preferably present on a main chain and/or a side chain terminal end. Among these, the cyano group as well as the acid halide group are more preferred from the perspective of reactivity. Moreover, the carboxyl group as well as the alkoxycarbonyl group are more preferred from the perspective of ease of manufacture, and in particular the carboxyl group is preferred.

The crosslinking site that can react with the crosslinking agent can be introduced through a macromolecular reaction on PTFE, and it can also be introduced when a monomer that provides the crosslinking site undergoes copolymerization with tetrafluoroethylene (abbreviated below as TFE). Methods to introduce a functional group into PTFE by a macromolecular reaction include dry methods such as by treatment of the PTFE with ionizing radiation, lasers, an electron beam, plasma, and corona discharge , and wet methods such as reduction by electrochemical means or with a Li metal/naphthalene complex, are known conventionally. Furthermore, employment of the latter methods is preferred from the perspective of ease of manufacturing.

In the PTFE that relates to this embodiment, the content of the monomer that provides the crosslinking site as the amount of monomer required based on the TFE is preferably ≥0.01 mol%, more preferably ≥0.03 mol%, and furthermore preferably ≥0.06 mol%, and is preferably ≤50 mol%, more preferably ≤20 mol%, and furthermore preferably ≤5 mol%. If the content of the monomer that provides the crosslinking site is ≤0.01 mol%, an inadequate effect will be obtained, and if the content of the monomer that provides the crosslinking site is ≥50 mol%, there will be difficulties with the polymer obtained.

The monomer that provides the crosslinking site in this embodiment can have an ethylenic unsaturated bond, and can have a functional group such as a cyano group, a carboxyl group, an alkoxycarbonyl group or an acid halide group, and any desired compound can be employed if it possesses copolymerizability with TFE. For the monomer, either one of both open chain and cyclic compounds can be used. If the monomer is a cyclic compound, examples of compounds that possess the aforementioned functional group that can be named include cyclopentene and its derivatives, norbornene and its derivatives, polycyclic norbornene and its derivatives, vinyl carbazole and its derivatives, along with such compounds in which either some or all of the hydrogen atoms have been substituted with halogen atoms, in particular with fluorine atoms including fluoroalkyl groups. Furthermore, from the perspective of polymerizability, open chain compounds are preferred monomers. In addition, in particular among the open chain compounds, the monomers depicted by the generic formula below are preferred.

CY¹Y²=CY³(O)ₘ(R⁸)ₙ Z¹ (7)

(where in the formula, Y¹~Y³ are respectively and independently hydrogen atom, halogen atom, -CH₃, or CF₃, R⁸ is a divalent organic group, n is 0 or 1, m is 0 when n is 0 and is 0 or 1 when n is 1, Z¹ is a cyano group (-CN), carboxyl group (-COOH), alkoxycarbonyl group (-COOR⁹ where R is a monovalent organic group) or acid halide group (-COX, where X is a halogen atom))

In the above, from the perspective of polymerizability, Y¹ ~ Y³ are preferably hydrogen atom or halogen atom, and among the halogen atoms a fluorine atom is preferred. Specifically, examples of preferred structures that can be named include CH₂=CH-, CH₂=CF-, CFH=CF-, CFH=CH- and CF₂=CF-. In particular, the CH₂=CH-, CH₂=CF-and CF₂=CF- structures are more preferred. Furthermore, when n = 0, CH₂=CHCN, CH₂=CHCOOR, CF₂=CFCN and CF₂=CFCOOR are obtained as examples of compounds that are crosslinkable monomers.

When n = 0, m = 0, but when n = 1, m can be either 0 or 1. When m = 1, examples of preferred structures that can be named include CH₂=CHO-, CH₂=CFO-, CFH=CFO-, CFH=CHO- and CF₂=CFO-. In particular, CH₂=CHO-, CH₂=CFO- and CF₂=CFO- are examples of preferred structures that can be named.

For R⁸, any desired divalent organic group can be selected, but from the perspective of ease of synthesis and of polymerization, alkylene groups with from 1 to 100 carbon atoms that optionally contain an ether bond are preferred. Furthermore, the number of carbon atoms is more preferably from 1 to 50, and is furthermore preferably from 1 to 20. In such alkylene groups, some or all of the hydrogen atoms can be substituted by halogen atoms, and in particular with fluorine atoms. If the number of carbon atoms is ≥100, there will be difficulties with the polymer, since it will not be possible to obtain the preferred characteristics even if the crosslinking is carried out. The aforementioned alkylene group can be a straight-chain or a branched-chain group. Such straight-chain or branched-chain alkylene groups are constructed from the minimum structural units of which examples are shown below.
(i) Straight-chain type minimum structural units:
   -CH₂-, -CHF-, -CF₂-, -CHCl-, -CFCl-, -CCl₂-
(ii) Branched-chain type minimum structural units:

### <Structure 7>

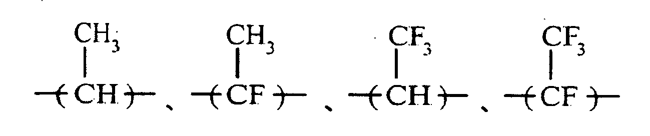

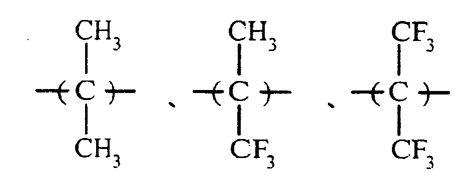

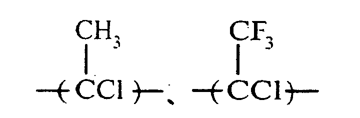

When the alkylene group represented by R⁸ does not contain an ether group, the alkylene group represented by R⁸ can be constructed from such minimum structural units alone, or paired with the straight-chain type (i) or paired with the branched-chain type (ii), or from suitable combinations thereof. Additionally, when the alkylene group represented by R⁸ does contain an ether group, the alkylene group represented by R can be constructed from such minimum structural units alone and an oxygen atom, or paired with the straight-chain type (i) or paired with the branched-chain type (ii) with an oxygen atom, or from suitable combinations thereof, but cannot be bonded to the paired oxygen atom. Furthermore, for the alkylene group represented by R⁸, even among the above examples, a dehydrochlorination reaction due to base cannot occur, so for purposes of greater stability, it is preferable that the R⁸ group be constructed from structural units that do not contain Cl.

In addition, it is furthermore preferable that the R⁸ possess the structure depicted by -R¹⁰-, -(OR¹⁰)- or -(R¹⁰O)- (where R¹⁰ is an alkylene group with from 1 to 6 carbon atoms that can optionally contain fluorine). Specifically, R¹⁰ can be the following straight-chain type or branched-chain type examples.

Examples of the straight-chain type that can be named include -CH₂-, -CHF-, -CF₂-, -CH₂CH₂-, -CF₂CH₂-, -CF₂CF₂-, -CH₂CF₂-, -CH₂CH₂CH₂-, -CH₂CH₂CF₂-, -CH₂CF₂CH₂-, -CH₂CF₂CF₂-, -CF₂CH₂CH₂-, -CF₂CF₂CH₂-, -CF₂CH₂CF₂-, -CF₂CF₂CF₂-, -CH₂CF₂CH₂CF₂-, -CH₂CF₂CF₂CF₂-, -CH₂CH₂CF₂CF₂-, -CH₂CH₂CH₂CH₂-, -CH₂CF₂CH₂CF₂CH₂-, -CH₂CF₂CF₂CF₂CH₂-, -CH₂CF₂CF₂CH₂CH₂-, -CH₂CH₂CF₂CF₂CH₂-, -CH₂CF₂-CH₂CF₂CH₂-, -CH₂CF₂CH₂CF₂CH₂CH₂-, -CH₂CH₂CF₂CF₂CH₂CH₂-, and -CH2CF2CH2CF₂CH₂CH₂-, and examples of the branched-chain type that can be named include

### <Structure 8>

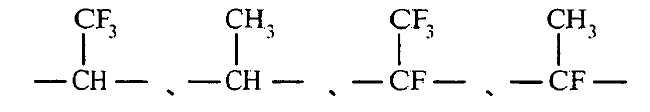

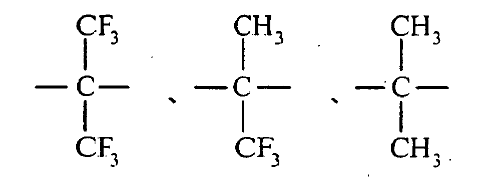

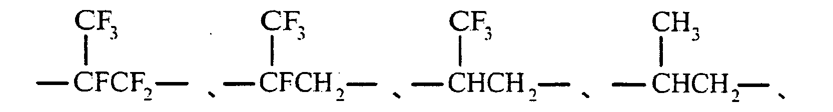

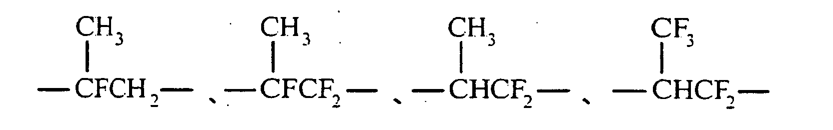

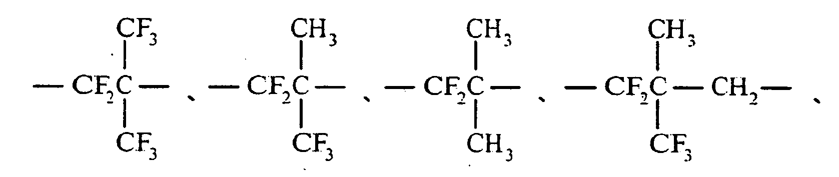

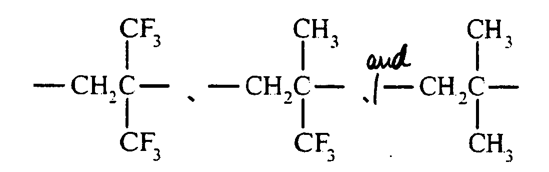

. Moreover, from the above structures, the compounds below can be obtained as examples.

CH₂=CH-(CF₂)ₙ-Z² (8)

(where in the formula, n is an integer from 2 to 8)

CY⁴₂=CY⁴(CF₂)ₙ-Z² (9)

(where in the formula, Y⁴ is a hydrogen atom or a fluorine atom, and n is an integer from 1 to 8)

CF₂=CFCF₂R_{f}⁴-Z² (10)

(where in the formula, R_{f}⁴ is

### <Structure 9>

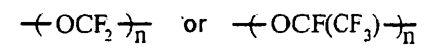

, and n is an integer from 0 to 5)

CF₂₌CFCF₂ (OCF(CF₃)CF₂)ₘ (OCH₂CF₂CF₂)ₙOCH₂CF₂-Z² (11)

(where in the formula, m is an integer from 0 to 5, and n is an integer from 0 to 5)

CF₂=CFCF₂ (OCH₂CF₂CF₂)ₘ (OCF(CF₃)CF₂)ₙ OCF(CF₃)-Z² (12)

(where in the formula, m is an integer from 0 to 5, and n is an integer from 0 to 5)

CF₂=CF(OCF₂CF(CF₃))ₘ O(CF₂)ₙ-Z² (13)

(where in the formula, m is an integer from 0 to 5, and n is an integer from 1 to 8)

CF₂=CF(OCF₂ CF(CF₃))ₘ-Z² (14)

(where in the formula, m is an integer from 1 to 5)

CF₂=CFOCF₂ (CF(CF₃ )OCF₂)ₙCF(-Z²)CF₃ (15)

(where in the formula, n is an integer from 1 to 4)

CF₂ =CFO(CF₂)ₙOCF(CF₃)-Z² (16)

(where in the formula, n is an integer from 2 to 5)

CF₂ =CFO(CF₂)ₙ-(C₆H₄)-Z² (17)

(where in the formula, n is an integer from 1 to 6)

CF₂=CF (OCF₂ CF(CF₃))ₙOCF₂CF(CF₃)-Z² (18)

(where in the formula, n is an integer from 1 to 2)

CH₂=CFCF₂O (CF(CF₃)CF₂O)ₙCF(CF₃)-Z² (19)

(where in the formula, n is an integer from 0 to 5)

CF₂=CFO (CF₂CF(CF₃)O)ₘ(CF₂)ₙ-Z² (20)

(where in the formula, m is an integer from 0 to 5, and n is an integer from 1 to 3)

CH₂=CFCF₂OCF(CF₃)OCF(CF₃)-Z² (21)

CH₂=CFCF₂OCH₂CF₂-Z² (22)

CF₂=CFO(CF₂CF(CF₃)O)ₘCF₂CF(CF₃)-Z² (23)

(where in the formula, m is an integer ≥0)

CF₂=CFOCF(CF₃)CF₂O(CF₂)ₙ-Z² (24)

(where in the formula, n is an integer ≥1)

CF₂=CFOCF₂OCF₂CF(CF₃)OCF₂-Z² (25)

CF₂=CF-(CF₂C(CF₃)F)ₙ-Z² (26)

(where in the formula, n is an integer from 1 to 5)

CF₂=CFO-(CFY⁵)ₙ-Z² (27)

(where in the formula, Y⁵ is F or -CF₃, and n is an integer from 1 to 10)

CF₂=CFO-(CF₂CFY⁶O)ₘ-(CF₂)ₙ-Z² (28)

(where in the formula, Y⁶ is F or -CF₃, m is an integer from 1 to 10 and n is an integer from 1 to 3)

CH₂=CFCF₂O-(CF(CF₃)CF₂O)ₙ-CF(CF₃)-Z² (29)

(where in the formula, n is an integer from 0 to 10)

CF₂=CFCF₂O-(CF(CF₃)CF₂O)ₙ,-CF(CF₃)-Z² (30)

(where in the formula, n is an integer from 1 to 10)
(where in the Generic Formulas (8) through (30), Z² is a cyano group (-CN group), carboxyl group (-COOH), alkoxycarbonyl group (-COOR¹¹ where R¹¹ is a monovalent organic group) or acid halide group (-COX group, where X is a halogen atom))

Furthermore, the aforementioned R¹¹ is a hydrogen atom or a monovalent organic group, but in order for the -COOR¹¹ group to be used as a crosslinking site, the -COOR¹¹ group is preferably a structure that can readily react with the reactive functional group of the crosslinking agent. In other words, an R¹¹ that is readily desorped is preferred. Examples of such R¹¹ that can be named include sulfonate esters such as of toluenesulfonic acid, nitrotoluenesulfonic acid and trifluoromethanesulfonic acid, phosphate esters as well as organophosphate esters. However, sulfonate esters are not preferred for afraid that the sulfonic acid that is desorped is highly acidic and there is a concern about the corrosion of metals (for example, metal molding equipment). In addition, phosphate esters or organophosphate esters are not preferred for the reason that there is a concern that the phosphoric acid or the organophosphoric acid that is desorped will cause deleterious effects on the environment. Consequently, a preferred R¹¹ is an alkyl group that optionally contains an ether bond or an aromatic ring. In this case, the number of carbon atoms is preferably from 1 to 20, more preferably from 1 to 10, and furthermore preferably from 1 to 6. Additionally, substitution of some of the hydrogen atoms by halogen atoms is preferable because the desorptability will be high. Specifically, examples of R¹¹ when it is an alkyl group optionally containing an ether bond or an aromatic ring that can be named include methyl, ethyl, propyl isopropyl, butyl, phenyl, 1,1,1-trifluoroethyl, 1,1,1,2,2-heptafluoropropyl, and 1,1,1,3,3,3-hexafluoroisopropyl. Moreover, from the perspective of high reactivity, an acid halide group as indicated by -COX is preferred. However, when the PTFE polymerization is carried out in an aqueous medium, the acid halide group is not preferred because of its instability in water. Furthermore, the acid halide group is preferred when the PTFE polymerization is carried out in a nonaqueous medium.

In the monomers indicated by the Generic Formulas (8) through (30), their cyano groups, carboxyl groups, alkoxycarbonyl groups or acid halide groups are crosslinking sites, and promote the crosslinking reaction with the crosslinking agent.

Specific examples of monomers as depicted in Generic Formula (9) that can be named include:
CF₂=CF-CF₂-CN, CF₂=CF-CF₂CF₂-CN,
CF₂=CF-CF₂-COOH, CF₂=CF-CF₂CF₂-COOH,
CF₂=CF-CF₂-COOCH₃ and CF₂=CF-CF₂CF₂-COOCH₃,
but from the perspective of crosslinking reactivity,
CF₂=CF-CF₂-CN and CF₂=CF-CF₂CF₂-CN,
are preferred, and from the perspective of superior polymerization reactivity,
CF₂=CF-CF₂-COOH, CF₂=CF-CF₂CF₂-COOH,
CF₂=CF-CF₂-COOCH₃ and CF₂=CF-CF₂CF₂-COOCH₃
are preferred.

Specific examples of monomers as depicted in Generic Formula (26) that can be named include:
CF₂ =CFCF₂C(CF₃)FCN, CF₂ =CF(CF₂C(CF₃)F)₂CN,
CF₂=CFCF₂C(CF₃)FCOOH,
CF₂=CF(CF₂C(CF₃)F)₂ COOH,
CF₂=CFCF₂C(CF₃)FCOOCH₃,
CF₂=CF(CF₂C(CF₃)F)₂COOCH₃,
but from the perspective of polymerization reactivity, CF₂=CF-CF₂C(CF₃)FCOOH is preferred.

Specific examples of monomers as depicted in Generic Formula (27) that can be named include:
CF₂=CFOCF₂CF₂CF₂CN, CF₂=CFOCF₂CF₂CN,
CF₂=CFOCF₂ CN,
CF₂=CFOCF₂CF₂CF₂COOH, CF₂=CFOCF₂CF₂COOH,
CF₂=CFOCF₂COOH,
CF₂=CFOCF₂CF₂CF₂COOCH₃,
CF₂=CFOCF₂CF₂COOCH₃, CF₂=CFOCF₂COOCH₃
but from the perspective of crosslinking reactivity and polymerization reactivity,
CF₂=CFOCF₂CF₂CF₂COOH, CF₂=CFOCF₂CF₂COOH,
CF₂=CFOCF₂CF₂CF₂COOCH₃ and
CF₂=CFOCF₂CF₂COOCH₃
are preferred.

Specific examples of monomers as depicted in Generic Formula (28) that can be named include:
CF₂=CFOCF₂CF(CF₃)OCF₂CF₂CN,
CF₂=CFOCF₂CF(CF₃)OCF₂CF₂COOH,
CF₂=CFOCF₂CF(CF₃)OCF₂CF₂COOCH₃,
but from the perspective of reactivity,
CF₂=CFOCF₂CF(CF₃)OCF₂CF₂CN,
is preferred, and from the perspective of ease of manufacture,
CF₂=CFOCF₂CF(CF₃)OCF₂CF₂COOH and
CF₂=CFOCF₂CF(CF₃)OCF₂CF₂COOCH₃,
are preferred.

Specific examples of monomers as depicted in Generic Formula (29) that can be named include:
CH₂=CFCF₂OCF(CF₃)CN,
CH₂=CFCF₂OCF(CF₃)CF₂OCF(CF₃)CN,
CH₂=CFCF₂O(CF(CF₃)CF₂O)₂CF(CF₃)CN,
CH₂=CFCF₂OCF(CF₃)COOH,
CH₂=CFCF₂OCF(CF₃)CF₂OCF(CF₃)COOH,
CH₂=CFCF₂O(CF(CF₃)CF₂O)₂CF(CF₃)COOH,
CH₂-CFCF₂OCF(CF₃)COOCH₃,
CH₂=CFCF₂OCF(CF₃)CF₂OCF(CF₃)COOCH₃ and
CH₂=CFCF₂O(CF(CF₃)CF₂O)₂CF(CF₃)COOCH₃,
but from the perspective of polymerization reactivity, CH₂=CFCF₂OCF(CF₃)CN,
CH₂=CFCF₂OCF(CF₃)CF₂OCF(CF₃)CN,
CH₂=CFCF₂OCF(CF₃)COOH,
CH₂=CFCF₂OCF(CF₃)CF₂OCF(CF₃)COOH,
CH₂=CFCF₂OCF(CF₃)COOCH₃ and
CH₂=CFCF₂OCF(CF₃)CF₂OCF(CF₃)COOCH₃
are preferred.

Specific examples of monomers as depicted in Generic Formula (30) that can be named include:
CF₂=CFCF₂OCF(CF₃)CF₂OCF(CF₃)CN,
CF₂=CFCF₂OCF(CF₃)CF₂OCF(CF₃)COOH and
CF₂=CFCF₂OCF(CF₃)CF₂OCF(CF₃)COOCH₃,
but from the perspective of reactivity,
CF₂=CFCF₂OCF(CF₃)CF₂OCF(CF₃)CN
is preferred, and from the perspective of ease of manufacture,
CF₂=CFCF₂OCF(CF₃)CF₂OCF(CF₃)COOH and
CF₂=CFCF₂OCF(CF₃)CF₂OCF(CF₃)COOCH₃
are preferred.

In addition, the aforementioned reactive functional groups when bonded to a straight-chain alkylene group such as -CF₂-CN or -CF₂-COOR are more preferred for exhibiting higher reactivity as compared to when they are bonded to a branched-chain alkylene group such as -CF(CF₃)-CN or -CF(CF₃)-COOR.

Furthermore, in the PTFE that relates to this embodiment, at the same time that the abovementioned reactive functional group-containing monomers are used as a component of the copolymer, any desired monomer can also be used as a component of the copolymer. Examples of monomers other than those that provide a crosslinking site that can be named, include fluorine-containing monomers other than TFE or non-fluorine-containing monomers. Copolymerizable monomers of this type can also possess functional groups that do not react with crosslinking agents. Examples of functional groups that do not react with crosslinking agents that can be named include hydroxyl groups, sulfonic acid groups, phosphoric acid groups, sulfonimide groups, sulfonamide groups, phosphorimide groups, phosphoramide groups, carboxamides groups, and carboximide groups. If monomers with functional groups that do not react with crosslinking agents are used as copolymer components, effects such as improved adhesiveness and improved dispersibility are anticipated. Additionally, when monomers that do not contain such functional groups are introduced as copolymer components, they can be used to carry out adjustments in the particle size, adjustments of the melting point, and adjustments of the physical properties. Moreover, examples of the aforementioned "fluorine-containing monomers" that can be named include fluoroolefins, cyclic fluorinated monomers, and fluorinated alkyl vinyl ethers. Examples of the aforementioned fluoroolefins that can be named include hexafluoropropylene (HFP), vinyl fluoride, vinylidene fluoride (VDF), trifluoroethylene, hexafluoroisobutylene, and perfluorobutylethylene. In addition, examples of the aforementioned cyclic fluorinated monomers that can be named include perfluoro-2,2-dimethyl-1,3-dioxole (PDD), and perfluoro-2-methylene-4-methyl-1,3-dioxolane (PMD). Additionally, examples of the aforementioned fluorinated alkyl vinyl ethers that can be named are represented by the generic formula Cy⁷₂=CY⁸OR¹² or CY⁷₂=CY⁸(OR¹³), OR¹² (where the Y can be the same or different and are H or F, Y⁸ is H or F, R¹² is an alkyl group or an alkyl group with a functional group in the terminal position with from 1 to 8 carbon atoms and where some or all of the hydrogen atoms can optionally be substituted by fluorine atoms, R¹³ can be the same or different and is an alkyl group with from 1 to 8 carbon atoms and where some or all of the hydrogen atoms can optionally be substituted by fluorine atoms, and n is an integer from 0 to 10). Furthermore, for example, the aforementioned fluorinated alkyl vinyl ether is preferably perfluoro(methyl vinyl ether) (PMVE), perfluoro(ethyl vinyl ether) (PEVE) or perfluoro(propyl vinyl ether) (PPVE). Moreover, the aforementioned "non-fluorine-containing monomers" are not limited in any particular way to those that are copolymerizable with the aforementioned TFE, and examples that can be named include hydrocarbon monomers. The aforementioned hydrocarbon monomers can optionally possess elements such as halogen atoms other than fluorine, oxygen, nitrogen, or any sort of substituent groups. Examples of the aforementioned hydrocarbon monomers that can be named include alkenes, alkyl vinyl ethers, vinyl esters, alkyl aryl ethers, and alkyl aryl esters.

The TFE used in the present invention can be manufactured by conventional polymerization methods such as emulsion polymerization, suspension polymerization, and solution polymerization. Regarding the polymerization conditions such as the time period and temperature during the polymerization, a suitable decision can be made from consideration of the type of monomer.

It is possible to use a broad range of emulsifying agents in the emulsion polymerization, but from the perspective of suppressing chain transfer reactions to the emulsifying agent molecule that arise during the polymerization, saline of carboxylic acids that possess fluorocarbon chains or fluoropolyether chains are preferred.

The polymerization initiators that can be used include persulfates such as ammonium persulfate (APS), or organic peracids such as disuccinic peroxide (DSP), and diglutaric peroxide, used singly or in the form of mixtures. In addition, the aforementioned polymerization initiators can be used together with reducing agents such as sodium sulfite, for using materials in the redox series. More preferred are groups that yield a carboxyl group or that generate a carboxyl group (examples that can be named include acid fluoride, acid chloride, and -CF₂OH, all of which generate a carboxyl group in the presence of water) that is preferably obtained at a site on the main chain terminal end. Concrete examples that can be named include ammonium persulfate (APS), and potassium persulfate (KPS).

Additionally, conventionally-used chain transfer agents can be used to adjust the molecular weight. A compound that is used as such a chain transfer agent will include at least one from among the group that includes hydrocarbons, halogenated hydrocarbons and water-soluble organic compounds. The aforementioned chain transfer agent can optionally include any one of a hydrocarbon that does not include a halogenated hydrocarbon, a halogenated hydrocarbon that does not include a hydrocarbon, and a hydrocarbon and a fluorinated hydrocarbon; moreover one or two or more types of hydrocarbon, halogenated hydrocarbon, and water-soluble organic compound can be used. From the perspective of satisfactory dispersibility and homogeneity within the reaction system, the aforementioned chain transfer agent preferably includes at least one selected from the group that includes methane, ethane, butane, HFC-134a, HFC-32, methanol and ethanol.

In addition, by furthermore utilizing compounds that contain iodine or bromine, a narrow molecular weight distribution can be obtained, and adjustment of the molecular weight will be easy. Examples of such chain transfer agents that possess iodine atoms are provided in the following list as the compounds represented by the Generic Formulas (31) ∼(39). The compounds represented by:

I(CF₂CF₂)ₙI (31)

ICH₂CF₂CF₂(OCF(CF₃)CF₂)ₘOCF(CF₃)-Z³ (32)

ICH₂CF₂CF₂(OCH₂CF₂CF₂)ₘOCH₂CF₂-Z³ (33)

I(CF₂)ₙZ³ (34)

I(CH₂CF₂)ₙZ³ (35)

ICF₂CF₂OCF₂CF(CF₃)OCF₂CF₂-Z³ (36)

ICH₂CF₂CH₂CH₂CF₂-Z³ (37)

ICF₂CF₂OCF₂CF₂-Z³ (38)

and ICF₂CF₂O(CF₂)ₙOCF₂CF₂-Z³ (39)

(where in the formula, Z³ is a cyano group (-CN group), carboxyl group (-COOH group), alkoxycarbonyl group (-COOR¹⁴ group where R¹ is an alkyl group with from 1 to 10 carbon atoms and that optionally contains fluorine atoms), m is an integer from 0 to 5 and n is an integer ≥1) can be used. Among these, from the perspective of possessing a crosslinking site that can react with a crosslinking agent, the chain transfer agents represented by Generic Formulas (32)∼(39) are preferred.

For the methods for isolating the polymer product from the mixture of polymerization reaction products obtained from emulsion polymerization, coagulation methods such as coagulation by acid treatment or coagulation by freeze-drying or ultrasound or the like can be employed, but the method of coagulation by mechanical power is preferred from the perspective of simplification of the process. In the method of coagulation by mechanical power, an aqueous dispersion is normally diluted to a polymer concentration of 10-20 wt%, and the pH has been optionally adjusted according to the conditions, this is stirred vigorously in a vessel that is equipped with a stirrer. Additionally, the coagulation can also be carried out continuously through the use of an inline mixer. Furthermore, if pigments for coloring or fillers for improving the mechanical properties are added before or during coagulation, it is possible to obtain a PTFE fine powder in which the pigments and fillers are uniformly mixed.

While it is in a moist powder state that is relatively non-flowable, and more preferably while it is maintained under stationary conditions, the drying of the coagulated PTFE can be carried out by employing a means such as reduced pressure, high frequency wave, or heated air. Friction within the powder, particularly at high temperature, generally exerts unfavorable effects on a PTFE fine powder. This is because even when there are small shearing forces on PTFE particles of this type, they will readily undergo fibrillation, which results in the loss of the original stable particle structure. The drying temperature is 10-250 °C, preferably 100-200 °C.

For the PTFE used in the present invention, metal salts or ammonium salts of carboxylic acids that are present in the polymer product can be converted into carboxyl groups by subjecting the polymer product to an acid treatment. Suitable acid treatment methods can be washing with, for example, hydrochloric acid, sulfuric acid or nitric acid or the like, or the mixture system following polymerization reaction can be brought to a pH of ≤3 with these acids.

Moreover, carboxyl groups can be introduced to PTFE via acidification of PTFE that contains iodine or bromine with fuming nitric acid.

Furthermore, as for methods to introduce cyano groups, carboxyl groups or alkoxycarbonyl groups, the methods described in WO 00/05959 can be used.

### <Crosslinking agent>

A crosslinking agent that relates to this embodiment of the present invention is able to form a cyclic structure by reaction with one or a plurality of the abovementioned reactive functional groups. Among the functional groups capable of undergoing a crosslinking reaction, this crosslinking agent is preferred when it reacts with one or a plurality of the abovementioned reactive functional groups to form a heterocycle. Furthermore, this crosslinking agent is particularly preferred if it can undergo a cyclization reaction to form a π-electron deficient heterocycle. Thus, in this case, π-electron deficient heterocycles (azole, triazole, azine, diazine, and triazine) with superior oxidation resistance and chemical resistance will be formed in the crosslinking reaction. In this way it is possible to form nonconventional, robust crosslinked structures. For the crosslinking reactions to form such π-electron deficient heterocycles, for example, the known reactions described in "Heterocyclic Compounds, New Ed., Standard Ed. Applied Ed., Yamanaka et al., Kodansha Scientific, 2004" can be employed. Examples of the finally formed crosslinked structures that can be named include the crosslinked structure formed via a triazole cyclization reaction of PTFE that contains cyano groups with a crosslinking agent that contains a plurality of cyano groups, the crosslinked structure formed via a triazole cyclization reaction of PTFE that contains cyano groups with a crosslinking agent that contains a plurality of hydrazine groups, the crosslinked structure formed via a triazole cyclization reaction of PTFE that contains acid halide groups, carboxyl groups or alkoxycarbonyl groups with a crosslinking agent that contains a plurality of guanidine groups, the crosslinked structure formed via a triazole cyclization reaction of PTFE that contains acid halide groups, carboxyl groups or alkoxycarbonyl groups with a crosslinking agent that contains a plurality of amidrazone groups. Chiefly among these, the utilization of the crosslinking reaction that is a 1,3-azole ring synthesis reaction that employs a ring closure reaction by forming a 1,2-bond is preferred. In addition, the introduction of a heterocycle as the crosslink point also has the effect of increasing the adhesive properties between PTFE and other materials.

It is preferable for such crosslinking agents to be at least one type of compound selected from the group consisting of bis(diaminophenyl) compounds, bis(aminophenol) compounds and bis(aminothiophenol) compounds that contain at least two crosslinking reactive groups as shown in Generic Formula (1), as well as bis(amidrazone) compounds and bis(amidoxime) compounds as shown in Generic Formula (2), bis(amidrazone) compounds as shown in Generic Formula (3), and bis(amidoxime) compounds as shown in Generic Formula (4).

### <Structure 10>

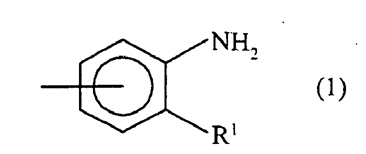

(where in the formula, R¹ can be the same or different and is -NH₂, -NHR², -OH or -SH, and R² is a fluorine atom or a monovalent organic group)

### <Structure 11>

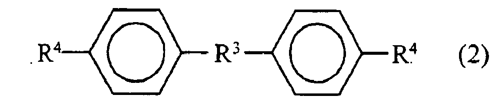

(where in the formula, R³ is an -SO₂-, -O-, -CO-, an alkylene group with from 1 to 6 carbon atoms, a perfluoroalkylene group with from 1 to 10 carbon atoms, or a single bond, and R4 is

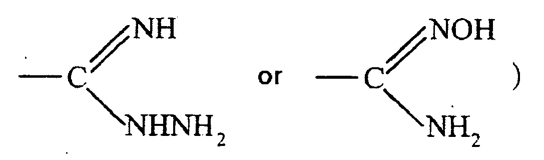

### <Structure 12>

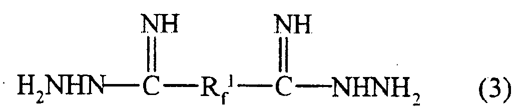

(where in the formula, R_{f}¹ is a perfluoroalkylene group with from 1 to 10 carbon atoms)

### <Structure 13>

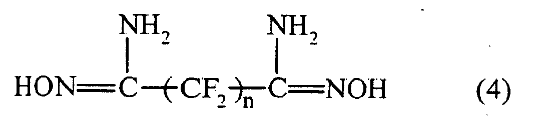

(where in the formula, n is an integer from 1 to 10)

Of the compounds depicted in Generic Formula (1) that possess at least 2 crosslinking reactive groups, those that possess from 2 to 3 crosslinking reactive groups are preferred, and those that possess 2 crosslinking reactive groups are more preferred. The compounds depicted in Generic Formula (1) that possess fewer than 2 crosslinking reactive groups are not able to crosslink.

Substituent group R² in the crosslinking reaction group depicted in Generic Formula (1) is fluorine atom or a monovalent organic group other than a hydrogen atom. The N-R² bond is preferred because it has higher oxidation resistance than an N-H bond.

Examples of the monovalent organic group that can be named include aliphatic hydrocarbon groups, the phenyl group or benzyl group. Specifically, examples of R² that can be named include lower alkyl groups with from 1 to 10 carbon atoms, particularly from 1 to 6 carbon atoms such as -CH₃, -C₂H_{5,} and -C₃H₇ ; fluorine atom-containing lower alkyl groups with from 1 to 10 carbon atoms, particularly from 1 to 6 carbon atoms such as -CF₃,-C₂F₅-CH₂F,-CH₂CF₃, and -CH₂C₂F₅ ; the phenyl group; benzyl groups; phenyl groups or benzyl groups where from 1 to 5 hydrogen atoms have been substituted with fluorine atoms such as -C₆F_{5,} and -CH₂C₆F₅ ; and, phenyl groups or benzyl groups where from 1 to 5 hydrogen atoms have been substituted with -CF₃ such as -C₆H₅₋ₙ(CF₃)ₙ, and CH₂C₆H₅₋ₙ(CF₃)ₙ (where n is an integer from 1 to 5).

Among these, from the perspectives of particularly superior heat resistance, favorable crosslinking reactivity and furthermore relative ease of synthesis, the phenyl group and -CH₃ are preferred.

Additionally, for the crosslinking agent, the compounds depicted in Generic Formula (5) below are preferred from the perspective of ease of synthesis.

### <Structure 14>

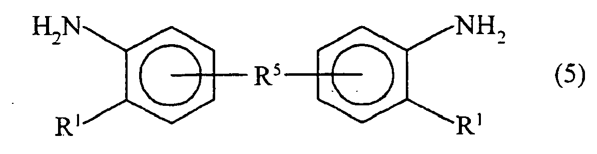

(where in the formula, R¹ is the same as the aforementioned R¹, R⁵ is -SO₂-, -O-, -CO-, an alkylene group with from 1 to 6 carbon atoms, a perfluoroalkylene group with from 1 to 10 carbon atoms, or a single bond, or the group depicted as

### <Structure 15>

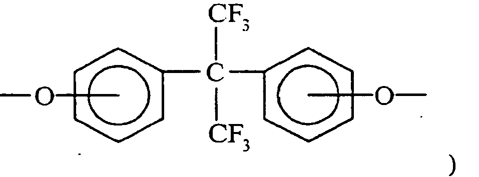

Specific examples of preferred alkylene groups with from 1 to 6 carbon atoms that can be named include the methylene group, ethylene group, propylene group, butylene group, pentylene group, and hexylene group, and examples of perfluoroalkylene groups with from 1 to 10 carbon atoms that can be named include,

### <Structure 16>

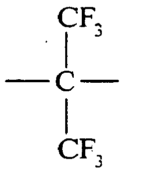

. Furthermore, examples of such crosslinking agents are the bis(diaminophenyl) compounds that are known from Japanese Published Examined Patent Application H2-59177, and Japanese Published Unexamined Patent Application H8-120146.

The more preferred crosslinking agents from among these are the compounds depicted in Generic Formula (6).

### <Structure 17>

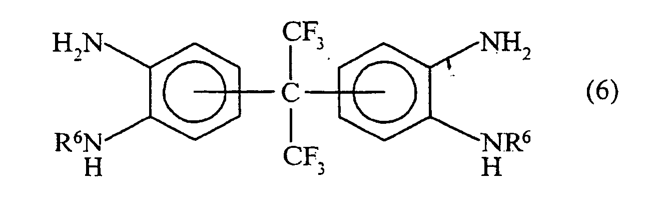

(where in the formula, R⁶ can be the same or different and can be any one of hydrogen atom; alkyl group of from 1 to 10 carbon atoms; alkyl group of from 1 to 10 carbon atoms that contains fluorine atoms; phenyl group; benzyl group; a phenyl or benzyl group where from 1 to 5 hydrogen atoms have been substituted with fluorine atoms and/or -CF₃)

Furthermore, for the crosslinking agents that relate to this embodiment, particularly preferable are those abovementioned that utilize the crosslinking reaction that is a 1,3-benzoazole ring synthesis reaction that employs a ring closure reaction by forming a 1,2-bond. The introduction of a benzoxazole and aromatic ring increases the adhesive properties between PTFE and other materials.

Specific examples that can be named include
2,2-bis(3,4-diaminophenyl)hexafluoropropane,
2,2-bis[3-amino-4-(N-methylamino)phenyl]hexafluoropropene,
2,2-bis[3-amino-4-(N-ethylamino)phenyl]hexafluoropropene,
2,2-bis[3-amino-4-(N-propylamino)phenyl]hexafluoropropene,
2,2-bis[3-amino-4-(N-phenylamino)phenyl]hexafluoropropene,
2,2-bis[3-amino-4-(N-perfluorophenylamino)phenyl]hexafluoropropene,
and 2,2-bis[3-amino-4-(N-benzylamino)phenyl]hexafluoropropene. Among these, from the perspective of superior heat resistance and particularly favorable crosslinking reactivity, 2,2-bis(3,4-diaminophenyl)hexafluoropropene is furthermore preferred.

Such bis(amidoxime) crosslinking agents, bis(amidrazone) crosslinking agents, bis(aminophenol) crosslinking agents, bis(aminothiophenol) crosslinking agents or bis(diaminophenol) crosslinking agents react with the cyano groups, carboxyl groups, alkoxycarbonyl groups or acid halide groups possessed by the PTFE that is used in the present invention, and forms oxazole rings, thiazole rings or imidazole rings to provide a PTFE crosslinked body.

The crosslinking agents illustrated above provide a PTFE crosslinked body that maintains the conventional strength, crystallinity and surface characteristics without any anisotropy or heterogeneity, and is more difficult to deform than conventional polytetrafluoroethylene resin. Moreover, the employment of the aforementioned crosslinking agents in this embodiment has the effect of increasing the adhesive properties between PTFE and other materials.

The amount of crosslinking agent that is added, based on PTFE being 100, is preferably from 0.01 to 20 parts by weight, and is more preferably from 0.03 to 10 parts by weight. If the crosslinking agent is less than 0.01 parts by weight, the trend is not to obtain sufficient mechanical strength, heat resistance and chemical resistance for practical use, while if the amount exceeds 20 parts by weight, when substantial periods of time elapse in the crosslinking, there is a tendency for the PTFE crosslinked body to become more brittle. In addition, by adjusting the amount of crosslinking agent that is added, it is possible to modify the physical properties of the PTFE molded body. For example, an amount of crosslinking agent is sufficient to react with all of the reactive functional groups that have been introduced into the abovementioned PTFE can be added, or an amount of crosslinking agent can be added that is planned to provide an effect derived from the functional groups such as improved adhesion with other materials from the remaining un-crosslinked sites since the reactive functional groups introduced into the abovementioned PTFE will not all have reacted.

### <Methods for manufacturing the crosslinkable PTFE composition of matter>

The crosslinkable PTFE composition of matter that relates to the present invention can be manufactured with a dry mixing method where the above-described components are mixed through the use of a sealed mixing device. Additionally, it is also possible to manufacture this crosslinkable PTFE composition of matter by wet methods, where the PTFE is immersed in a dispersion of the crosslinking agent or a solution thereof dissolved in water or an organic solvent or is stirred in a solution after having been immersed, or a dispersion of the PTFE dispersed in water or an organic solvent is mixed with the crosslinking agent and is stirred. Furthermore, when a wet mixing method is employed, it is preferable to use ultrasonic vibration in order to increase further the contact between the crosslinking agent and the PTFE. Moreover, the crosslink density can be increased when a dispersion solution in which the primary particles are retained after the polymerization is stirred and titrated with a solution in which the crosslinking agent is dissolved in a high polarity organic solvent such as NMP, DMF or DMSO.

### <Methods for manufacturing a powdered PTFE crosslinked body>

The powdered PTFE crosslinked body that relates to the present invention is obtained by treatment under conditions that are thought to be suitable and appropriate. For example, when an oxazole crosslinking is carried out, the crosslinkable PTFE composition of matter or the powdered PTFE crosslinked body is placed in a circulating air oven, and a PTFE crosslinked body can be obtained by maintaining at 120-320 °C for a period of 1-300 minutes. In addition, when an imidazole crosslinking is carried out, it is possible to obtain a PTFE crosslinked body that has favorable properties at a relatively low crosslinking temperature (for example, 120-280 °C, more preferably 120-250 °C). Furthermore, it is satisfactory if the heating temperature is not constant, and it can be changed incrementally. For example, a method can be considered where, after the temperature is maintained in the vicinity of the melting point of the crosslinking agent and the PTFE is sufficiently impregnated with the crosslinking agent, the crosslinking reaction is carried out at an increased temperature. Additionally, by maintaining the generated powdered PTFE crosslinked body at ≥100°C for a fixed period of time, it is possible to eliminate impurities such as from inherent unreacted crosslinking agent or by products during the crosslinking reaction. In these cases, it is preferable to maintain at ≥200 °C for ≥1 hour.

### <Manufacturing methods for a molded body>

A molded body can be obtained from a crosslinkable PTFE composition of matter or a powdered PTFE crosslinked body in a satisfactory manner by using conventional methods, examples of which that can be named include known methods such as compression molding, ram extrusion molding, paste extrusion molding and the like. In the case where the molded body is obtained by compression molding methods, molding by hot coining methods is also possible, but molding by free baking methods that have higher productivity than hot coining methods is also possible. A metal mold is filled with the aforementioned crosslinkable PTFE composition of matter or powdered PTFE crosslinked body, and after a preliminary molded body is obtained through compression with 2-100 MPa, preferably 10-70 MPa of pressure, the obtained preliminary molded body can be baked in a circulating air oven at a temperature from the melting point to 420 °C, preferably from the melting point to 380 °C over a period of from 10 minutes to 10 days, preferably from 30 minutes to 5 hours. In this case, any arbitrary rates of temperature increase or cooling can be used, but 10-100 °C/hour is preferred, and 20-60 °C/hour is more preferred. Moreover, for example, an incremental temperature increase adjustment method can be employed, with a higher temperature increase rate up to 300 °C and a lower temperature increase rate ≥300 °C, and a lower cooling rate down to 300°C and a higher cooling rate ≤300°C.

By forming crosslinks in the crosslinkable PTFE composition of matter that relates to the present invention, it is possible to obtain the PTFE molded body that relates to the present invention. The PTFE molded body of the present invention maintains the conventional strength, crystallinity and surface characteristics without any anisotropy or heterogeneity, and is more difficult to deform than conventional polytetrafluoroethylene resin. In addition, this PTFE molded body has superior heat resistance and chemical resistance.

The PTFE crosslinked body of the present invention can be used as a powder or as a molded body. A specific example that can be named of a use for the powder is as a modifying material. PTFE powder being employed as a modifying material and added to general-use resins, in particular engineering plastics, or fluororesins or fluororubbers is known from disclosures in patent documents such as Japanese Published Unexamined Patent Application S60-110749, Japanese Published Unexamined Patent Application S62-72751, Japanese Published Unexamined Patent Application 2000-109668, Japanese Published Unexamined Patent Application H11-269350, and Japanese Published Unexamined Patent Application H10-9270, but it is also true that the powdered PTFE crosslinked body that relates to the present invention can be used as a modifying material in suitable applications. When a PTFE crosslinked body is used as a modifying material in powder form, it is preferable for the PTFE to have a low molecular weight.

Additionally, the powdered PTFE crosslinked body that relates to the present invention can be dispersed in or blended in another material such as a molding resin or elastomer to improve the flame retardant properties, non-adhesive properties, sliding characteristics, water/oil repellency, electrical characteristics, resistance to stains, corrosion resistance, weather resistance, and physical properties. Furthermore, in place of the powdered PTFE crosslinked body, after the crosslinkable PTFE composition of matter is dispersed in or blended in another material, this dispersion product or blended product can also be heated to crosslink the PTFE.

Specific examples of other materials that can be named include general-use plastics such as polyethylene resin, polypropylene resin, ethylene-vinyl acetate copolymer resins, ethylene-ethyl acrylate copolymer resins, ethylene-vinyl alcohol copolymer resins, poly(cycloolefin) resins, poly(isobutylene) resins, polyolefin resins, poly(vinyl chloride) resins, and polystyrene resins, engineering plastics such as poly(methylpentene) resins, acrylonitrile-styrene copolymer resins (AS resins), styrene-methyl methacrylate copolymer resins, acrylonitrile-butylene-styrene copolymer resins (ABS resins), acrylonitrile-acrylate-styrene copolymer resins (AAS resins), acrylonitrile-ethylene-propylene-diene rubber-styrene copolymer resins (AES resins), acrylonitrile-styrene-acrylate copolymer resins (ASA resins), silicone-acrylonitrile-styrene copolymer resins (SAS resins), acrylic resins, methacrylic resins, polyamide resins, polycarbonate resins, polyacetal resins, poly(phenylene ether) resins, poly(butylene terephthalate) resins, poly(ethylene terephthalate) resins, poly(ethylene naphthalate) resins, poly(phenylene sulfide) resins, fluororesins, poly(ether sulfone) resins, poly(ether imide) resins, poly(ether ketone) resins, poly(ether ether ketone) resins, polyimide resins, polyarylate resins, aromatic polyester resins, poly(phenylene sulfide) resins, polysulfone resins, aromatic poly(ester amide) resins, aromatic azomethine resins, poly(arylene sulfide) resins, polyketone resins, poly(amide-imide) resins, and poly(ether nitrile) resins, or fluororesins such as PTFE, poly(chlorotrifluoroethylene), tetrafluoroethylene-perfluoro(alkyl vinyl ether) copolymers (PFA), tetrafluoroethylene-hexafluoropropylene copolymers (FEP), or fluororubbers such as tetrafluoroethylene-perfluoro(alkyl vinyl ether) copolymer elastomers, vinylidene fluoride-hexafluoropropylene copolymer elastomers, and vinylidene fluoride-tetrafluoroethylene-hexafluoropropylene copolymer elastomers. Moreover, other materials such as epoxy resins, phenolic resins, urea resins, melamine resins, unsaturated polyester resins, alkyd resins, and diallyl phthalate resins, as liquids before curing, solutions, and solid powders can also be used. In such cases, it is possible to obtain a molded body through a curing process (for example, a heat-curing process). In the case of employing the PTFE crosslinked body of the present invention as a modifying material, the amount added that is based on the other component is preferably 1-80 wt%, and is furthermore preferably 5-50 wt%.

Furthermore, in the present invention, the resin that is the dispersing object or the blending object of the powdered PTFE crosslinked body or crosslinkable PTFE composition of matter, a thermoplastic resin with a crystal melting point or a glass transition temperature of ≥150°C is included as preferred. Examples of thermoplastic resin are polyacetals resins, polyamide resins, polycarbonate resins, poly(phenylene ether) resins, aromatic polyester resins, aromatic poly(ester amide) resins, aromatic azomethine resins, poly(arylene sulfide) resins, polysulfone resins, poly(ether sulfone) resins, polyketone resins, poly(ether ketone) resins, poly(ether imide) resins, poly(amide-imide) resins, poly(methylpentene) resins, and poly(ether nitrile) resins.

Examples of the preferred resins among these that can be named as preferred objects of the present invention include (1) those with high heat resistance, in other words, in the case that powdered PTFE crosslinked body is blended, it is necessary that the heat stability of the blended material not be reduced, and since the heat resistance of the thermoplastic resin itself will be increased, with the aim of improving the impact resistance and chemical resistance, generic modifying agents and additives are used, and since the heat resistance of the blend is ultimately reduced thereby, the addition of a fluorine-containing resin with high resistance is desirable in such a resin, (2) a material with superior mechanical strength and dimensional stability, where a fluororesin can improve such physical properties, (3) a material with superior moldability, where blended materials with a fluorine-containing resin can provide superior processability, for example aromatic polyester resins, polyamide resins, poly(amide-imide) resins, poly(arylene sulfide) resins, polyketone resins, poly(ether nitrile) resins, polycarbonate resins, poly(phenylene ether) resins, polysulfone resins, poly(ether imide) resins, and polyimide resins.

More specifically, poly(arylene sulfide) resins that are strongly desirable in general for improving the impact resistance without losing the heat resistance and chemical resistance, polyamide resins that is desirable for improved solvent resistance and particularly for gasoline resistance when used as materials for automotive components, aromatic polyester resins the addition of which can be expected to increase the moldability and mechanical physical properties of the fluororesin, among such resins, liquid crystalline polyesters, which have high elasticity modulus and superior molding process workability and dimensional stability and form an anisotropic melt phase that can be expected to exhibit extensive increases in the mechanical physical properties, moldability, dimensional stability and deflection temperature under load by increasing the compatibility with fluororesins, are particularly preferred objects.

On the other hand, when the affinity between the powdered PTFE crosslinking body related to the present invention and the thermoplastic resin are considered, since poly(phenylene sulfide) resins contain thiolate groups (or thiol groups), polyamide resins contain amino groups and carboxyl groups as well as amide bonds, aromatic polyester resins contain hydroxy groups and carboxyl groups as well as ester bonds, there is higher affinity with the functional groups in the powdered PTFE crosslinking body of the present invention, and its significance is also said to be a preferred object.

Furthermore, since it is known that functional groups are exposed on the surface of the powdered PTFE crosslinking body that relates to the present invention, when these functional groups react with a portion of the main chains or terminal ends of the thermoplastic resin, its functional groups and the portion of the thermoplastic resin functional groups cause a chemical reaction to occur and its reaction products act as an agent to improve the compatibility of the blend that contains unreacted material, and it can be assumed interfacial compatibility or interfacial adhesion will be observed with the thermoplastic resin. Furthermore, when the powdered PTFE crosslinking body is a crosslinkable PTFE composition of matter, it can be assumed that this tendency is strengthened further.

The mechanism by which the favorable reciprocal dispersibility due to the blending of thermoplastic resins with powdered PTFE crosslinking bodies as above is unclear, but this does not limit the present invention in any way.

In order to have high compatibility or reactivity with the powdered PTFE crosslinking body of the present invention, modification of the thermoplastic resin by the law of the art is not excluded from the present invention. Additionally, resin blends of the present invention can also contain resin components other than a powdered PTFE crosslinking body and a thermoplastic resin.

The poly(phenylene sulfide) resin that is a blend target for the powdered PTFE crosslinking body can be obtained by known methods such as those described in Japanese Published Examined Patent Application S45-3368, and is preferred when ≥70 mol% of the repeating unit represented by Formula (40) below:

### <Structure 18>

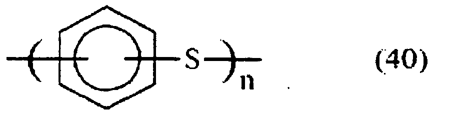

is contained. Furthermore, a poly(phenylene sulfide) resin that contains ≥70 mol% of the p-phenylene sulfide repeating unit is particularly preferred. In this case, without any limitation that the remaining repeating unit be a copolymerizable unit, examples that can be named include the o-phenylene sulfide unit, the m-phenylene sulfide unit, diphenyl sulfide ether units, diphenyl sulfide sulfone units, diphenyl sulfide ketone units, biphenyl sulfide units, naphthalene sulfide units, and trifunctional phenylene sulfide units. For these copolymers, either block copolymers or random copolymers are satisfactory.

Specific examples of preferred poly(phenylene sulfide) resins that can be named include poly(p-phenylene sulfide) resins, poly(p-phenylene sulfide)-poly(m-phenylene sulfide) block copolymer resins, poly(p-phenylene sulfide)-polysulfone block copolymer resins, and poly(p-phenylene sulfide)-poly(p-phenylene sulfide sulfone) block copolymer resins.

Moreover, these can be straight-chain types, they can be oxygen crosslinked in the presence of oxygen, or they can have undergone heat treatment in an inert gas, and furthermore they can be mixtures of such structures.

In addition, in order to raise the compatibility of the powdered PTFE crosslinked body of the present invention, highly reactive functional groups can be introduced into the poly(phenylene sulfide) resin. The amino group, carboxylic acid group, and hydroxyl group are suitable as introduced functional groups, and examples of the methods for introduction that can be named include copolymerization with a halogenated aromatic compound that contains such a functional group and macromolecular reaction between the poly(phenylene sulfide) resin and a small molecular weight compound that contains the functional group.

Additionally, a reduction in sodium ions by carrying out a deionizing treatment (acid rinse or hot water rinse) of the poly(phenylene sulfide) resin is also satisfactory.

Resin blends constituted from powdered PTFE crosslinked body and poly(phenylene sulfide) resin obtained as described above can provide molded bodies with superior mechanical properties and particularly impact resistance that are not obtained when only fluorine-containing resins that do not contain simple functional groups are blended.

Moreover, since the heat resistance, chemical resistance and sliding characteristics naturally possessed by fluorine-containing resins and the heat resistance and mechanical properties naturally possessed by poly(phenylene sulfide) can be provided simultaneously, these resin blends can be particularly useful as molding materials, by employing the heat resistance and electrical characteristics in electric and electronic components, employing the sliding characteristics in automotive components, and employing the chemical resistance in piping for chemical plants and gear components for valve pumps.

Furthermore, polyamide resins with their superior high strength, high toughness, processability and oil resistance find wide application in hoses, tubes, and pipe. However, polyamide resins are weaker against alcoholic solvents, and in particular have inferior gasohol resistance when gasoline that contains lower alcohols is used, and since this gives rise to an inferior material due to diminished strength when the volume swelling and fuel permeability become significant, improvements are needed from this perspective. Furthermore, it is necessary to reduce the wear coefficient.

However, by blending this polyamide resin with the powdered PTFE crosslinked body that relates to the present invention, and moreover by adding the powdered PTFE crosslinked body or the crosslinkable PTFE composition of matter that relates to the present invention to blends of polyamide resin with fluororesin that does not contain functional groups, it is possible to obtain a resin wherein the solvent resistance and gasoline resistance of the polyamide resin has been improved.

Polyamide resins that can be used are manufactured by condensation of linear diamines represented by the formula below:

H₂N-CH₂)_{p"}-NH₂

(where in the formula, p" is an integer from 3 to 12), with linear carboxylic acids represented by the formula below:

HO₂C-(CH₂)_{q"}-CO₂H

(where in the formula, q" is an integer from 2 to 12), or are manufactured by ring-opening polymerization of lactams. Preferred examples of these polyamide resins that can be named include nylon-6,6, nylon-6,10, nylon-6,12, nylon-4,6, nylon-3,4, nylon-6,9, nylon-6, nylon-12, nylon-11, and nylon-4. In addition, it is possible to use polyamide-type copolymers such as nylon-6/6,10, nylon-6/6,12, nylon-6/4,6, nylon-6/12, nylon-6/6,6, nylon-6/6,6/6,10, nylon-6/4,6/6,6, nylon-6/6,6/6,12, nylon-6/4,6/6,10, and nylon-6/4,6/12 .

Furthermore, it is also possible to include nylon 6/6,T (T is a terephthalic acid component), half-aromatic polyamides obtained from aromatic dicarboxylic acids such as terephthalic acid, isophthalic acid and meta-xylenediamine or alicyclic diamines, and polyamides obtained from meta-xylenediamine with linear carboxylic acids.

The above-described resin blends constituted from a powdered PTFE crosslinked body and a polyamide resin or resin blends from the addition of a powdered PTFE crosslinked body to a blend of a polyamide resin with a fluororesin that does not contain functional groups can provide molded bodies with chemical resistance, low-temperature impact resistance and mechanical characteristics that cannot be obtained when only fluororesins that do not contain functional groups are simply blended. In particular, these are useful as materials that have superior impermeability and chemical resistance toward improved gasolines that contain alcohols (for example, methanol, and ethanol), methyl t-butyl ether, or acids, and the molded bodies are useful as hoses, tubes, pipes, seals, gaskets, packings, sheets, and films. Additionally, useful materials can be obtained that have the impermeability and chemical resistance particularly against gasoline and gasoline methanol mixtures that is required for automotive components, for example fuel piping hoses, tubes, and gaskets.

By replacing the conventional fluorine-containing resins with a powdered PTFE crosslinked body that relates to the present invention being blended with a heat-resistance thermoplastic resin, among which in particular the aromatic polyester resins or polycarbonate resins, moreover when blending a conventional fluorine-containing resin with an aromatic polyester resins or polycarbonate resin and adding a powdered PTFE crosslinked body, it is possible to obtain a resin blend that improves on the mechanical characteristics, deflection temperature under load and dimensional stability possessed by the fluororesin.

At the same time, polycarbonates are widely used in automobiles or in the construction field because of characteristics such as mechanical strength, impact resistance, and weather resistance, but they have the disadvantage that the chemical resistance and particularly the alkali resistance are inferior.

The same method that improved the chemical resistance of the polyamide resins can be used, and when the powdered PTFE crosslinked body that possesses hydroxy groups from among the powdered PTFE crosslinked bodies that relate to the present invention is blended with the polycarbonate, an improved resin blend can be obtained in which the mechanical physical properties are not remarkably diminished and the chemical resistance is more effective.

Examples of the aromatic polyester resins that are used in the resin blends that relate to the present invention that can be named include the condensation products between dibasic acids such as adipic acid, terephthalic acid, 2,6-naphthalenedicarboxylic acid, and 4,4'-biphenyldicarboxylic acid with divalent alcohols such as ethylene glycol, trimethylene glycol, tetramethylene glycol, pentamethylene glycol, hexamethylene glycol, 1,4-cyclohexanedimethanol, and bisphenol A (for example, poly(ethylene terephthalate resin), poly(butylene terephthalate resin), poly(1,4-cyclohexanedimethylene terephthalate) resin, and poly[2,2-propane-bis(4-phenyl-tere/isophthalate)]) and aromatic polyesters formed from an anisotropic molten phase (liquid crystal copolyester) .

Moreover, the polycarbonate resin that is used in the resin blend that relates to the present invention can be obtained through the reaction of a bisphenol compound with phosgene or a carbonate diester. A particularly preferred bisphenol compound is 2,2-bis(4-hydroxyphenyl)propane (abbreviated below as bisphenol A), but bisphenol A can be substituted in whole or in part by other bisphenol compounds. Examples of bisphenol compounds other than bisphenol A that can be named include hydroquinone; resorcinol, 4,4'-dihydroxydiphenyl, bis-(4-hydroxyphenyl)alkanes, bis-(4-hydroxyphenyl)cycloalkanes, bis-(4-hydroxyphenyl) sulfide, bis-(4-hydroxyphenyl) ether, bis-(4-hydroxyphenyl)ketone, bis-(4-hydroxyphenyl)sulfone, bis-(4-hydroyphenyl)sulfoxide, or any of the foregoing with alkyl substituents, aryl substituents, and halogen substituents .

Furthermore, among these, and depending on their orientation, liquid crystal polyesters will have the most superior performance in mechanical properties such as strength and elastic modulus, thermal properties such as deflection temperature under load, and dimensional stability, and will exhibit high fluidity in the melt. Furthermore, liquid crystal polyesters are oriented in a resin blend by melt blending with other resins and can provide the same superior characteristics as mentioned above, and can be the most preferred objects to obtain improved compositions of matter or thermoplastic elastomer compositions of matter with the mechanical properties, deflection temperature under load, dimensional stability, and moldability of fluororesins. For the liquid crystal polyesters used in the present invention, examples that can be named include the liquid crystal copolyesters that are constituted from components that are selected from one or two types of aromatic dicarboxylic acid or alicyclic dicarboxylic acid, one or two types of aromatic diol, alicyclic diol or aliphatic diols and one or two types of aromatic hydroxycarboxylic acid. Examples of representative compositions that can be named include para-hydroxybenzoic acid, biphenyldior and terephthalic acid as the main components (for example, Econol E2000, E6000 or E7000 from Sumitomo Chemical Co., Ltd.; Xydar RC/FC400, 300 from Nippon Oil Co., Ltd.; the Vectra C series from Polyplastics Co., Ltd.; UENO LCP2000 from Ueno Chemical Industries Ltd.; Idemitsu LCP300 from Idemitsu Chemicals Co., Ltd.); para-hydroxybenzoic acid and 6-hydroxynaphthoic acid as the main components (for example, Victrex SRP from ICI Japan Co., Ltd.; UENO LCP1000 from Ueno Chemical Industries Ltd.; the Vectra A series from Polyplastics Co., Ltd.; Novaculate E324 from Mistubishi Chemicals Co., Ltd.; Idemitsu LCP300 from Idemitsu Chemicals Co., Ltd.; Rodran LC-5000 from Unitika, Ltd.); and, para-hydroxybenzoic acid, terephthalic acid and aliphatic diols as the main components (for example, Novaculate E310 from Mistubishi Chemicals Co., Ltd.; Idemitsu LCP100 from Idemitsu Chemicals Co., Ltd.; Rodran LC-3000 from Unitika, Ltd.; and, X7G from Eastman Kodak, Co., Ltd.).

The resin blends with the abovementioned improved mechanical properties, deflection temperature under load, dimensional stability and moldability of the fluorine-containing resins among the resin blends that contain aromatic polyester resins and polycarbonate resins obtained as described above, when combined with the superior heat resistance, chemical resistance and electrical properties of the added fluorine-containing resin itself, the effect is to provide particularly useful materials for electrical and electronic components that require dimensional stability, heat resistance and electrical properties, for example connectors, chips, carriers, sockets, printed circuit boards, wire coating materials, products related to semiconductors that require chemical resistance; and, in particular the large scale wafer baskets, or valves and chemical pump components where there are problems of moldability and insufficient strength with the fluororesin, in mechanical systems that require heat resistance and sliding characteristics, for example the components that surround the fuel in automobiles, gears, and bearings. In addition, such resin blends also have the moldability and recyclability for injection molding as thermoplastic elastomers.

Consequently, the resin blends that relate to the present invention find application as useful materials for tubes, chemical stoppers, gaskets, and syringes in the clinical and biochemical fields; tubes, O-rings, and sealing materials in the field of semiconductor production; heat resistant electrical wire coating materials, and sealing materials in the electrical and electronics fields; hoses, and seals in food industriy field; hoses, tubes, gaskets, constant velocity joint boots, and rack-and-pinion boots in the automobile-related fields; pressure resistant hoses, diaphragms, packings, gaskets, and hoses in the chemical industry field; and, sealing materials in the construction field.

Furthermore, the resin blend that relates to the present invention, within the scope wherein its effect is not damaged, can contain a blending quantity normally of 1-30 wt% based on the main composition of matter that can include, for example, fibrous reinforcing fillers such as glass fibers, carbon fibers, aramide fibers, graphite whiskers, potassium titanate whiskers, basic magnesium sulfate whiskers, magnesium whiskers, magnesium borate whiskers, calcium carbonate whiskers, calcium sulfate whiskers, lead oxide whiskers, aluminum borate whiskers, alumina whiskers, silicon carbide whiskers, silicon nitride whiskers, wollasonite, zonolite, sepiolite, plaster fibers, and slag fibers, inorganic fillers such as carbon powder, graphite powder, calcium carbonate powder, talc, mica, clay, and glass beads, heat resistant resins such as polyamide resins , and solid lubricants such as molybdenum disulfide, or other commonly used inorganic or organic fillers such as flame retardants, and colorants. At this time, depending on the presence of unreacted functional groups contained in the resin blend that relates to the present invention, it is also possible to obtain a case where the filler effect is much improved.

Additionally, by using the crosslinkable PTFE composition of matter or the powdered PTFE crosslinked body that relate to the present invention alone, it is possible for a PTFE molded body with physical properties, sliding characteristics, heat resistance and weather resistance that are superior to that of a molded body that uses conventional PTFE to be obtained easily. Thus, such a PTFE molded body can be employed in broad applications such as packings, gaskets, tubes, linings, coatings, insulating tapes, bearings, air dome roof membranes, gas-liquid separation membranes, separators, and support membranes. Examples of shapes of the molded body that can be named include tube, film, sheet, fiber, and porous membrane shapes. For molding methods to achieve such shapes, generally known methods can be used. Specifically, these include methods for crosslinking PTFE after the crosslinkable PTFE composition of matter has been molded, and methods for molding powdered PTFE crosslinked bodies, but a suitable selection of such methods can be made that corresponds to the circumstances. For example, when molding into fibers, the crosslinking treatment can be applied after the molded body of the crosslinkable PTFE composition of matter has been drawn and molded into a fiber, or the PTFE molded body after the crosslinking treatment can be drawn into fibers. Moreover, if the present crosslinkable PTFE composition of matter is used as lining or coating materials for another material, methods that can be employed include a method for crosslinking after an un-crosslinked PTFE dispersion is applied, or a method for applying an already crosslinked PTFE dispersion, or a method for crosslinking the crosslinkable PTFE composition of matter after the lining or coating has been applied, or a method for applying a lining or coating of an already crosslinked PTFE molded body. However, in general, it is preferable to carry out the crosslinking after the uncrosslinked body is molded.

In the present invention, particularly in fields where high purity and freedom from contamination are not required, the PTFE molded body can be blended with common additives, depending on the requirements, and for example it can be blended with fillers, processing aids, plasticizers, colorants, stabilizers, and bonding aids, and the aforementioned materials can be blended with one or more different general use crosslinking agents or crosslinking aids.

The crosslinkable PTFE composition of matter that relates to the present invention, depending on the requirements, can be subjected further to other treatments after the crosslinking treatment. By applying further treatments to the PTFE after the crosslinking treatment, a plurality of techniques for improving specific capabilities have been introduced, but the PTFE crosslinked body of the present invention can also have its capabilities improved through the employment of various suitable known methods. For example, if it is desired to impart a hydrophilic property to the PTFE crosslinked body of the present invention, (1) the PTFE crosslinked body can be irradiated with radiation, lasers, electron beams, plasma, and corona discharge ; (2) the PTFE crosslinked body can be reduced electrochemically or with a Li metal/naphthalene complex; (3) surfactants can be added to the PTFE crosslinked body; (4) the PTFE crosslinked body can be impregnated with hydrophilic macromolecules such as poly(vinyl alcohol), or poly(ethylene glycol) ; (5) metal oxides can be attached to the PTFE crosslinked body; (6) the PTFE crosslinked body can be mixed and loaded with inorganic powders.

Working examples of the present invention are described below.

### <Working Examples>

### (1) Methods for synthesizing PTFE that contains reactive functional groups.

### (Synthesis Example 1)

To a 6-L stainless steel reaction vessel equipped with a stirrer was added 3,560 g of deionized water, 94 g of paraffin wax and 5.4 g of an ammonium perfluorooctanoate dispersant. Next, while the reaction vessel contents were being vacuumed and heated to 70 °C, at the same time that the TFE monomer was being charged, the interior of the reaction vessel was purged to eliminate oxygen. Following this, 0.17 g of ethane gas and 16.6 g of perfluorobutenoic acid (PFBA) were added to the reaction vessel, and the contents were stirred at 280 rpm. TFE monomer was charged to the reaction vessel until it was pressurized to 0.73 MPa. A solution of 0.36 g of ammonium persulfate (APS) initiator dissolved in 20 g of deionized water was charged to the reaction vessel, which was pressurized to 0.83 MPa. After the initiator was introduced, the occurrence of a pressure drop and initiation of polymerization were observed. TFE monomer was charged to the reaction vessel to maintain the pressure, and the polymerization was continued until a total of approx. 1.1 kg of TFE had reacted. Following this, the reaction vessel was evacuated, and the contents were taken out and cooled. The supernatant of paraffin wax was removed from the PTFE aqueous dispersion.

The concentration of the solids fraction of the PTFE aqueous dispersion obtained was 23.7 wt%, with an average primary particle diameter of 0.22 µm. Furthermore, for this average primary particle diameter, the correlation relationship between the transmittance of an aqueous dispersion of the PTFE with a 15 wt% solids fraction that was prepared and introduced into the prescribed cell at incident 550 nm light, and the numerical average primary particle diameter calculated from measurement of unidirectional diameter with a transmission electron microscope photograph was obtained. The average primary particle diameter of the sample obtained was obtained by fitting the transmittance measured for the sample obtained to the abovementioned correlation relationship (calibration curve method).

The aqueous PTFE dispersion was diluted with deionized water to give an approx. 15 wt% solids concentration, and a gel was formed under high-speed stirring conditions. The gelled powder was dried at 145 °C for 18 hours. The level of PFBA modification in the PTFE powder at this time was 0.28 mol%. Furthermore, the level of modification was measured with a ¹⁹F-MAS-NMR (Bruker), by employing the following measurement conditions - probe diameter: 4.0 mm; spin rate during measurement: 13-15 KHz; ambient atmosphere: nitrogen; measurement temperature: 150 °C. The TFE-derived peak and modifying agent-derived peak (peak at -179 to -190 ppm for PFBA, peak at -77 to -88 for CBVE and CNVE) were detected, and the peak area ratio was determined to calculate the level of modification.

### (Synthesis Example 2)

The polymerization was carried out in the same manner as for Synthesis Example 1, except that the amount of PFBA was 6.6 g.

This time, the concentration of the solids fraction of the PTFE aqueous dispersion obtained was 23.8 wt%, with an average primary particle diameter of 0.20 µm. In addition, this time the level of PFBA modification in the PTFE powder was 0.14 mol%.

### (Synthesis Example 3)

The polymerization was carried out in the same manner as for Synthesis Example 1, except that the amount of PFBA was 6.6 g and the amount of ethane was 3.0 mL.

This time, the concentration of the solids fraction of the PTFE aqueous dispersion obtained was 23.7 wt%, with an average primary particle diameter of 0.23 µm. Additionally, this time the level of PFBA modification in the PTFE powder was 0.12 mol%.

Furthermore, in the present synthesis example, since the amount of the chain transfer agent ethane was less than in Synthesis Examples 1 and 2, the PTFE obtained from the present synthesis example had a higher molecular weight than that of the PTFE obtained in Synthesis Examples 1 and 2. Specifically, this was determined in this case from the standard specific gravity (SSG) measured by the water displacement method according to ASTMD 4895-89 using the prepared sample.

### (Synthesis Example 4)

The polymerization was carried out in the same manner as for Synthesis Example 1, except that the amount of PFBA was 1.7 g and the amount of ethane was 3.0 mL.

This time, the concentration of the solids fraction of the PTFE aqueous dispersion obtained was 23.2 wt%, with an average primary particle diameter of 0.20 µm. Moreover, this time the level of PFBA modification in the PTFE powder at this time was 0.03 mol%.

### (Synthesis Example 5)

To a 6-L stainless steel reaction vessel equipped with a stirrer was added 3,380 g of deionized water. Next, while the reaction vessel contents were being vacuumed and heated to 70 °C, at the same time that the TFE monomer was being charged in, the interior of the reaction vessel was purged to eliminate oxygen. Following this, 0.51 g of ethane gas and 6.6 g of PFBA were charged to the reaction vessel, and the contents were stirred at 700 rpm. TFE monomer was charged to the reaction vessel until it was pressurized to 0.73 MPa. A solution of 0.68 g of APS initiator dissolved in 20 g of deionized water was charged to the reaction vessel, which was pressurized to 0.83 MPa. After the initiator was introduced, the occurrence of a pressure drop and initiation of polymerization were observed. TFE monomer was charged to the reaction vessel to maintain the pressure, and the polymerization was continued until a total of approx. 0.8 kg of TFE had reacted. Then, after the reaction vessel was evacuated and was cooled to room temperature, the PTFE powder obtained was washed with deionized water and filtered.

The PTFE powder obtained was dried at 145 °C for 18 hours. The level of PFBA modification in the PTFE powder at this time was 0.20 mol%.

### (Synthesis Example 6)

The polymerization was carried out in the same manner as for Synthesis Example 5, except that the 6.6 g of PFBA from Synthesis Example 5 was 15.2 g of CBVE.

The PTFE powder obtained at this time was dried at 145 °C for 18 hours. In addition, the level of CBVE modification of the PTFE powder at this time was 0.45 mol%.

### (Synthesis Example 7)

The polymerization was carried out in the same manner as for Synthesis Example 5, except that the 6.6 g of PFBA from Synthesis Example 5 was 15.2 g of CBVE, the amount of the APS initiator was 0.07 g and ethane was not used.

The PTFE powder obtained at this time was dried at 145 °C for 18 hours after a coarse pulverization. Following this, it was pulverized to an average particle diameter of 10-150 µm in a fine grinding mill, to obtain a PTFE powder for molding. The level of CBVE modification of the PTFE powder at this time was 0.35 mol%.

### (Synthesis Example 8)

The polymerization was carried out in the same manner as for Synthesis Example 1, except that the 16.6 g of PFBA in Synthesis Example 1 was 14.6 g of perfluoro[3-(1-methyl-2-vinyloxyethoxy)propionitrile] (abbreviated below as CNVE).

This time, the concentration of the solids fraction of the PTFE aqueous dispersion obtained was 23.1 wt%, with an average primary particle diameter of 0.17 µm. Additionally, this time the level of CNVE modification in the PTFE powder was 0.14 mol%.

### (Synthesis Example 9)

The polymerization was carried out in the same manner as for Synthesis Example 1, except that the 16.6 g of PFBA in Synthesis Example 1 was 15.7 g of methyl perfluoro[3-(1-methyl-2-vinyloxyethoxy)propionate] (abbreviated below as RVEE) and the 0.17 g of ethane gas was 0.07 g.

This time, the concentration of the solids fraction of the PTFE aqueous dispersion obtained was 23.5 wt%, with an average primary particle diameter of 0.18 µm. In addition, the level of RVEE modification of the PTFE powder at this time was 0.25 mol%.

### (2) The preparation of the crosslinkable PTFE composition of matter, the powdered PTFE crosslinked body and the PTFE molded body, as well as physical property measurements.

### <Working Example 1>

A 100 g portion of the PTFE powder obtained in Synthesis Example 1 is mixed with 0.12 g of 2,2-bis(3,4-diaminophenyl)hexafluoropropane (referred to below as BDHF) in 200 g of THF solvent, and this was stirred well at room temperature. The THF solvent was removed by being maintained under reduced pressure at 30 °C for a period of 7 h, to prepare the crosslinkable PTFE composition of matter.

The crosslinkable PTFE composition of matter was placed in a circulating air oven, and after a heat treatment at 220 °C for a period of 2 h, it was slowly cooled to room temperature to obtain the powdered PTFE crosslinked body.

### (Measurement of the abrasion resistance)

A 42 g sample of the powdered PTFE crosslinked body was filled into a cylindrical metal mold with a diameter of 32 mm at room temperature. Next, after this was gradually pressurized to 19.6 MPa and maintained for 5 minutes, it was taken out of the metal mold to provide the pre-molded body. This pre-molded body was placed in a circulating air oven, and after being heated to 380 °C at a temperature increase rate of 25 °C/hour and baked for 1 hour, it was cooled down to 200 °C at a cooling rate of 60 °C/hour, and then was taken out of the oven to cool slowly to room temperature. A sliding test piece with an outer diameter of 25.6 mm, and inner diameter of 20.0 mm and a height of 15.0 mm was machined off from the molded body obtained.

An EFM-III-F apparatus (Orientec Co., Ltd.) was used, a partner component made of SUS304 was used, and the coefficient of friction and the specific wear rate were investigated by carrying out a friction and wear test under the following conditions - pressure: 0.4 MPa; rate: 1 m/sec; test duration: 7 hours. The results are described in Table 1.

### (Measurement of creep resistance)

A 15 g sample of the powdered PTFE crosslinked body was filled into a cylindrical metal mold with a diameter of 29.0 mm at room temperature. Next, after this was gradually pressurized to 14.0 MPa and maintained for 2 minutes, it was taken out of the metal mold to provide the pre-molded body. This pre-molded body was placed in a 290 °C circulating air oven, and after it was heated to 380 °C at a temperature increase rate of 120 °C/hour and baked for 30 minutes, it was cooled down to 294 °C at a cooling rate of 60 °C/hour, and after it was maintained at 294 °C for 24 minutes, it was taken out of the oven and cooled slowly to room temperature. A cylindrical compression creep test piece with a diameter of 11.0 mm and a height of 10.0 mm was machined off from the molded body obtained.

The compression creep of the test piece obtained was investigated at room temperature (23±2 °C), based on ASTM D621-64. After a load of 13.7 MPa of pressure for a 24 hour period, complete deformation had been achieved. Next, the deformation ratio after the load was released and continued over the course of 24 hours is taken as permanent distortion. The results are described in Table 1.

### (Tensile test)

A 12 g sample of the powdered PTFE crosslinked body was filled into a cylindrical metal mold with a diameter of 29.0 mm at room temperature. Next, after this was gradually pressurized to 14.0 MPa and maintained for 2 minutes, it was taken out of the metal mold to provide the pre-molded body. This pre-molded body was placed in a 290 °C circulating air oven, and after it was heated to 380 °C at a temperature increase rate of 120 °C/hour and baked for 30 minutes, it was cooled down to 294 °C at a cooling rate of 60 °C/hour, and after it was maintained at 294 °C for 24 minutes, it was taken out of the oven and cooled slowly to room temperature. After the molded body obtained was cut into a film shape with a thickness of 0.5 mm, it underwent annealing treatment in a circulating air oven at 380 °C for a period of 5 minutes, was cooled down to 250 °C at a cooling rate of 60 °C/hour, and after it was maintained at 250 °C for 5 minutes, it was taken out of the oven and cooled to room temperature. A microdumbell was punched from the film obtained as described in ASTM D 4895-94, to give the tensile test piece.

The tensile test was carried out using the Autograph AG-300kNI (Shimadzu Corp.) at a tensile rate of 50 mm/minute, and the yield point strength and the elastic modulus were determined. The results are described in Table 1.

### (Adhesion test)

After compression molding of a powdered PTFE crosslinked body into a sheet, this sheet-shaped molded body was inserted between two sheets of aluminum foil, and after setting up a press adjusted to 350 °C, this was compressed at 3 MPa for 10 minutes. The laminated body obtained was cut to a width of 1 cm, and a T-peel test was carried out. The results are described in Table 1.

### <Working Example 2>

The powdered PTFE crosslinked body was prepared and the tests were carried out in the same manner as in Working Example 1, except that the amount of BDHF used in the preparation of the crosslinkable PTFE composition of matter was 0.24 g. The results are described in Table 1.

### <Working Example 3>

The powdered PTFE crosslinked body was prepared and the tests were carried out in the same manner as in Working Example 1, except that the amount of BDHF used in the preparation of the crosslinkable PTFE composition of matter was 0.48 g. The results are described in Table 1.

### <Working Example 4>

The powdered PTFE crosslinked body was prepared and the tests were carried out in the same manner as in Working Example 1, except that the PTFE powder in Working Example 1 was replaced with that obtained in Synthesis Example 2. The results are described in Table 2.

### <Working Example 5>

The powdered PTFE crosslinked body was prepared and the tests were carried out in the same manner as in Working Example 1, except that the PTFE powder in Working Example 1 was replaced with that obtained in Synthesis Example 2, and furthermore the amount of BDHF for the preparation of the crosslinkable PTFE composition of matter was 0.24 g. The results are described in Table 2.

### <Working Example 6>

The powdered PTFE crosslinked body was prepared and the tests were carried out in the same manner as in Working Example 1, except that the PTFE powder in Working Example 1 was replaced with that obtained in Synthesis Example 2, and furthermore the amount of BDHF for the preparation of the crosslinkable PTFE composition of matter was 0.48 g. The results are described in Table 2.

### <Working Example 7>

The powdered PTFE crosslinked body was prepared and the tests were carried out in the same manner as in Working Example 1, except that the PTFE powder in Working Example 1 was replaced with that obtained in Synthesis Example 3, and furthermore the amount of BDHF for the preparation of the crosslinkable PTFE composition of matter was 0.24 g. The results are described in Table 3.

### <Working Example 8>

The powdered PTFE crosslinked body was prepared and the tests were carried out in the same manner as in Working Example 1, except that the PTFE powder in Working Example 1 was replaced with that obtained in Synthesis Example 4, and furthermore the amount of BDHF for the preparation of the crosslinkable PTFE composition of matter was 0.24 g. The results are described in Table 3.

### (3) Preparation of and physical property measurements for mixed molded bodies of PTFE with a crosslinkable PTFE composition of matter

### <Working Example 9>

Each of the sample pieces were prepared and the tests were carried out in the same manner as in Working Example 1, after the 4.7 parts by weight of the powdered PTFE crosslinked body obtained in Working Example 2 was added to 100 parts by weight of PTFE powder (F-104, Daikin Industries, Ltd.), and those were mixed thoroughly in a rocking mixer. The results are described in Table 4.

### <Working Example 10>

Each of the sample pieces were prepared and the tests were carried out in the same manner as in Working Example 1, after the 25.0 parts by weight of the powdered PTFE crosslinked body obtained in Working Example 2 was added to 100 parts by weight of based on PTFE powder (F-104, Daikin Industries, Ltd.), and those were mixed thoroughly in a rocking mixer. The results are described in Table 4.

### <Working Example 11>

Each of the sample pieces were prepared and the tests were carried out in the same
manner as in Working Example 1, after that the 42.9 parts by weight of the powdered PTFE crosslinked body obtained in Working Example 2 was added to 100 parts by weight of PTFE powder (F-104, Daikin Industries, Ltd.), and those were mixed thoroughly in a rocking mixer. The results are described in Table 4.

### (Comparative Example 1)

Each of the sample pieces were prepared and the tests were carried out in the same manner as in Working Example 1, except that the powdered PTFE crosslinked body in Working Example 1 was replaced by PTFE powder (F-104, Daikin Industries, Ltd.) The results are described in Table 5.

### (Comparative Example 2)

Each of the sample pieces were prepared in the same manner as in Working Example 1, except that the powdered PTFE crosslinked body in Working Example 1 was replaced by PTFE powder (F-104, Daikin Industries, Ltd.), these test pieces were irradiated with 100 kGy of gamma radiation in a vacuum. Following this, the tests were carried out in the same manner as in Working Example 1. The results are described in Table 5.

### (Comparative Example 3)

Each of the sample pieces were prepared in the same manner as in Working Example 1, except that the powdered PTFE crosslinked body in Working Example 1 was replaced by PTFE powder (F-104, Daikin Industries, Ltd.), these test pieces were irradiated with 1000 kGy of gamma radiation in a vacuum. Following this, the tests were carried out in the same manner as in Working Example 1. The results are described in Table 5.

### <Working Example 12>

A 210 g sample of the powdered PTFE crosslinked body obtained in Working Example 3 was filled into a metal mold with a diameter of 50 mm, and pressure was applied gradually until the molding pressure reached 29.4 MPa, after which the pressure was maintained for a further 5 minutes to prepare a pre-molded body. The pre-molded body obtained was taken out of the metal mold and placed in an electric oven, the temperature was increased from room temperature to 300 °C at a temperature increase rate of 50 °C/hour, then the temperature increase was continued up to 340 °C at a temperature increase rate of 25 °C/hour. After being maintained at 340 °C for 5 hours, it was cooled to 300 °C at a temperature decrease rate of 25 °C/hour, and then cooling continued at a temperature decrease rate of 50 °C/hour. In the same manner as for Working Example 1, sample pieces were prepared from the molded body obtained for use in each of the tests, and these tests were carried out. The results are described in Table 6.

### <Working Example 13>

As based on 100 parts by weight of PTFE powder (M-111, Daikin Industries, Ltd.), 100 parts by weight of the powdered PTFE crosslinked body obtained in Working Example 3 was added, and these were mixed thoroughly for a period of 1 minute at the rate of 3000 rpm using a cutter mixer (model K-55, Aikohsha Manufacturing Co., Ltd.). A 210 g portion of the powder mixture obtained was filled into a metal mold with a 50 mm diameter, and pressure was applied gradually until the molding pressure reached 29.4 MPa, after which the pressure was maintained for a further 5 minutes to prepare a pre-molded body. The pre-molded body obtained was taken out of the metal mold and placed in an electric oven, the temperature was increased from room temperature to 300 °C at a temperature increase rate of 50 °C/hour, then the temperature increase was continued up to 365 °C at a temperature increase rate of 25 °C/hour. After being maintained at 365 °C for 5 hours, it was cooled to 300 °C at a temperature decrease rate of 25 °C/hour, and then cooling continued at a temperature decrease rate of 50 °C/hour. In the same manner as for Working Example 1, sample pieces were prepared from the molded body obtained for use in each of the tests, and these tests were carried out. The results are described in Table 6.

### <Working Example 14>

This was carried out in the same manner as Working Example 13, except that 400 parts by weight of the powdered PTFE crosslinked body obtained in Working Example 3 was added, as based on 100 parts by weight of PTFE powder (M-111, Daikin Industries). In the same manner as for Working Example 1, sample pieces were prepared from the molded body obtained for use in each of the tests, and these tests were carried out. The results are described in Table 6.

### <Working Example 15>

The powdered PTFE crosslinked body was prepared in the same manner as in Working Example 1, except that the PTFE powder in Working Example 1 was replaced with that obtained in Synthesis Example 5, and furthermore the amount of BDHF for the preparation of the crosslinkable PTFE composition of matter was 0.35 g.

### <Working Example 16>

The powdered PTFE crosslinked body was prepared in the same manner as in Working Example 1, except that the PTFE powder in Working Example 1 was replaced with that obtained in Synthesis Example 6, and furthermore the amount of BDHF for the preparation of the crosslinkable PTFE composition of matter was 0.80 g.

### <Working Example 17>

The powdered PTFE crosslinked body was prepared in the same manner as in Working Example 1. except that the PTFE powder in Working Example 1 was replaced with that obtained in Synthesis Example 7, and furthermore the amount of BDHF for the preparation of the crosslinkable PTFE composition of matter was 0.62 g.

### (Comparative Example 4)

A 210 g sample of powdered PTFE (M-111, Daikin Industries, Ltd.) was filled into a metal mold with a diameter of 50 mm, and pressure was applied gradually until the molding pressure reached 29.4 MPa, after which the pressure was maintained for a further 5 minutes to prepare a pre-molded body. The pre-molded body obtained was taken out of the metal mold and placed in an electric oven, the temperature was increased from room temperature to 365 °C at a temperature increase rate of 50 °C/hour. Then, after being maintained at 365 °C for 5 hours, it was cooled at a temperature decrease rate of 50 °C/hour. In the same manner as for Working Example 1, sample pieces were prepared from the molded body obtained for use in each of the tests, and these tests were carried out. The results are described in Table 6.

### <Working Example 18>

After 500 g of the crosslinkable PTFE composition of matter obtained in Working Example 3 was thoroughly pulverized for 1 minute at a rotation rate of 3000 rpm using a cutter/mixer (model K-55, Aikohsha Manufacturing Co., Ltd.), this was sieved using a 300 µm opening mesh, after which the powder remaining on top of the mesh was removed to prepare the crosslinkable PTFE composition of matter.

Then, 210 g of the crosslinkable PTFE composition of matter obtained was filled into a metal mold with a 50 mm diameter, and pressure was applied gradually until the molding pressure reached 29.4 MPa, after which the pressure was maintained for a further 5 minutes to prepare a pre-molded body. Following this, the pre-molded body obtained was taken out of the metal mold and placed in an electric oven, the temperature was increased from room temperature to 220 °C at a temperature increase rate of 50 °C/hour. Then, after maintaining the temperature at 220 °C for 2 hours, the temperature was increased to 300 °C at a temperature increase rate of 50 °C/hour, and then the temperature increase continued at a rate of 25 °C/hour to reach a temperature of 365 °C. Then, after being maintained at 365 °C for 5 hours, it was cooled to 300 °C at a temperature decrease rate of 25 °C/hour, and then cooling continued without interruption at a temperature decrease rate of 50 °C/hour. In the same manner as for Working Example 1, sample pieces were prepared from the molded body obtained for use in each of the tests, and these tests were carried out. The results are described in Table 7.

### <Working Example 19>

The pre-molded body was prepared and the tests were carried out in the same manner as in Working Example 18, except the molding pressure was 49.0 MPa. The results are described in Table 7.

### <Working Example 20>

The PTFE powder in Working Example 1 was replaced with that obtained in Synthesis Example 8, and furthermore the amount of BDHF for the preparation of the crosslinkable PTFE composition of matter was 0.25 g, and thereafter the powdered PTFE crosslinked body was prepared in the same manner as in Working Example 1.

### <Working Example 21>

The PTFE powder in Working Example 1 was replaced with that obtained in Synthesis Example 9, and furthermore the amount of BDHF for the preparation of the crosslinkable PTFE composition of matter was 0.44 g, and thereafter the powdered PTFE crosslinked body was prepared in the same manner as in Working Example 1.

### <Working Example 22>

The powdered PTFE crosslinked body was prepared in the same manner as in Working Example 1, except that the 0.12 g of BDHF in Working Example 1 was 0.72 g of 6,6-dianilino-3,3-[2,2,2-trifluoro-1-(trifluoromethyl)ethylidene]dianiline for the preparation of the crosslinkable PTFE composition of matter.

### <Working Example 23>

The powdered PTFE crosslinked body was prepared in the same manner as in Working Example 1, except that the 0.12 g of BDHF in Working Example 1 was 0.50 g of 2,2-bis(3-amino-4-hydroxypheriyl)hexafluoropropane for the preparation of the crosslinkable PTFE composition of matter.

### <Working Example 24>

The powdered PTFE crosslinked body was prepared in the same manner as in Working Example 1, except that the 0.12 g of BDHF in Working Example 1 was 0.30 g of 3,3'-diaminobenzidine for the preparation of the crosslinkable PTFE composition of matter.

### <Working Example 25>

The powdered PTFE crosslinked body was prepared in the same manner as in Working Example 1, except that the 0.12 g of BDHF in Working Example 1 was 0.26 g of 2,3,6,7-tetraaminonaphthalene for the preparation of the crosslinkable PTFE composition of matter.

### <Working Example 26>

A Brabender mixer (Toyo Seiki Co, Ltd.) with an internal volume of 60 cm³ that was set up at 280 °C was charged with 55.0 g of polycarbonate resin (Panlite L-1125WP from Teijin Kasei Co.), and after being melted for only 5 minutes at a speed of 50 rpm, 6.0 g of the crosslinkable PTFE composition of matter obtained from Working Example 3 was added, and after 10 minutes of mix processing at 50 rpm a resin blend composition of matter was obtained.

### <Working Example 27>

A resin blend composition of matter was mix processed and obtained in the same manner as for Working Example 26, except the 55.0 g of polycarbonate resin in the Working Example was 57.0 g of nylon 66 (Leona 1300S, from Asahi Kasei Industries).

### <Working Example 28>

A resin blend composition of matter was mix processed and obtained in the same manner as for Working Example 26, except the 55.0 g of polycarbonate resin in the Working Example was replaced by 72.0 g of a liquid crystal polyester (Vectra A130, from Polyplastics Co., Ltd.), and furthermore the 6.0 g of the crosslinkable PTFE composition of matter was 7.9 g, and the temperature setting of 280°C was replaced with 320 °C.

### <Working Example 29>

A resin blend composition of matter was mix processed and obtained in the same manner as for Working Example 26, except the 55.0 g of polycarbonate resin in the Working Example was replaced by 77.0 g of fluororesin (Neoflon EFEP RP-5000, from Daikin Industries, Ltd.), and furthermore the 6.0 g of the crosslinkable PTFE composition of matter was 8.5 g.

### <Working Example 30>

A resin blend composition of matter was mix processed and obtained in the same manner as for Working Example 26, except the 55.0 g of polycarbonate resin in the Working Example was replaced by 93.0 g of tetrafluoroethylene-hexafluoropropylene copolymer (Neoflon FEP NP-30, from Daikin Industries, Ltd.), and furthermore the 6.0 g of the crosslinkable PTFE composition of matter was 10.3 g and the temperature setting of 280 °C was replaced with 300 °C.

### <Working Example 31 >

A resin blend composition of matter was mix processed and obtained in the same manner as for Working Example 26, except the 55.0 g of polycarbonate resin in the Working Example was replaced by 93.0 g of tetrafluoroethylene-perfluoro(alkyl vinyl ether) copolymer (Neoflon PFAAP-231, from Daikin Industries, Ltd.), and furthermore the 6.0 g of the crosslinkable PTFE composition of matter was 10.3 g and the temperature setting of 280°C was replaced with 320 °C.

### <Working Example 32>

A resin blend composition of matter was mix processed and obtained in the same manner as for Working Example 26, except the 55.0 g of polycarbonate resin in the Working Example was replaced by 92.0 g of poly(chlorotrifluoroethylene) (Neoflon PCTFE M-300, from Daikin Industries, Ltd.), and furthermore the 6.0 g of the crosslinkable PTFE composition of matter was 10.3 g and the temperature setting of 280 °C was replaced with 320 °C.

### <Working Example 33>

A resin blend composition of matter was mix processed and obtained in the same manner as for Working Example 26, except the 55.0 g of polycarbonate resin in the Working Example was replaced by 82.0 g of tetrafluoroethylene-ethylene copolymer (Neoflon ETFE EP-610, from Daikin Industries, Ltd.), and furthermore the 6.0 g of the crosslinkable PTFE composition of matter was 9.1 g.

### <Table 1>

**Table 1**

| | | Working Example 1 | Working Example 2 | Working Example 3 |
|---|---|---|---|---|
| Resin Modified composition | PTFE | Synthesis Example 1 | Synthesis Example 1 | Synthesis Example 1 |
| | BDHF (Note 1) | 0.2 | 0.5 | 1.0 |
| Friction / wear Test | Specific wear rate (10⁻⁸×mm³/N•m) | 1.47×10⁴ | 1.20×10⁴ | 8.93.10³ |
| | Coefficient of friction | 0.19∼0.21 | 0.19∼0.21 | 0.19∼0.21 |
| Compression creep Test | Compression creep (%) | 6.6 | 4.2 | 3.6 |
| | Permanent distortion (%) | 3.6 | 2.0 | 2.0 |
| Tensile test | Elasticity modulus (MPa) | 756 | 686 | 657 |
| | Yield point strength (MPa) | 13.1 | 13.2 | 13.3 |
| Adhesion test | | Satisfactory | Satisfactory | Satisfactory |

| | | | | |
|---|---|---|---|---|
| (Note 1) No. of equivalent amino groups based on the carboxyl groups of PFBA. | | | | |

### <Table 2>

**Table 2**

| | | Working Example 4 | Working Example 5 | Working Example 6 |
|---|---|---|---|---|
| Resin composition | Modified PTFE | Synthesis Example 2 | Synthesis Example 2 | Synthesis Example 2 |
| | BDHF (Note 1) | 0.3 | 0.5 | 1.0 |
| Friction / wear Test | Specific wear rate (10⁻⁸×mm³/N•m) | 1.23×10⁵ | 9.48×10⁴ | 6.92×10⁴ |
| | Coefficient of friction | 0.17∼0.19 | 0.17∼0.19 | 0.17∼0.19 |
| Compression creep Test | Compression creep (%) | 7.4 | 6.7 | 4.7 |
| | Permanent distortion (%) | 9.8 | 4.9 | 3.9 |
| Tensile test | Elasticity modulus (MPa) | 662 | 597 | 581 |
| | Yield point strength (MPa) | 12.4 | 12.5 | 12.5 |
| Adhesion test | | Satisfactory | Satisfactory | Satisfactory |

| | | | | |
|---|---|---|---|---|
| (Note 1) No. of equivalent amino groups based on the carboxyl groups of PFBA. | | | | |

### <Table 3>

**Table 3**

| | | Working Example 7 | Working Example 8 |
|---|---|---|---|
| Resin composition | Modified PTFE | Synthesis Example 3 | Synthesis Example 4 |
| | BDHF (Note 1) | 0.5 | 0.5 |
| Friction/wear Test | Specific wear rate (10⁻⁸×mm³/N•m) | 8.64×10⁵ | 6.57×10⁶ |
| | Coefficient of friction | 0.27~0.37 | 0.27~0.34 |
| Compression creep Test | Compression creep (%) | 9.2 | 10.5 |
| | Permanent distortion (%) | 6.6 | 11.2 |
| Tensile test | Elasticity modulus (MPa) | 809 | 921 |
| | Yield point strength (MPa) | 13.7 | 14.3 |
| Adhesion test | | Satisfactory | Satisfactory |

| | | | |
|---|---|---|---|
| (Note 1) No. of equivalent amino groups based on the carboxyl groups of PFBA. | | | |

### <Table4>

**Table 4**

| | | Working Example 9 | Working Example 10 | Working Example 11 |
|---|---|---|---|---|
| Resin composition | Powdered PTFE crosslinked body (Working Example 2) (wt%) | 4.5 | 20 | 30 |
| | PTFE powder (F-104) (wt%) | 95.5 | 80 | 70 |
| Friction/wear Test | Specific wear rate (10⁻⁸×mm³/N•m) | 8.77×10⁵ | 7.68×10⁴ | 2.68×10⁴ |
| | Coefficient of friction | 0.22~0.32 | 0.26~0.36 | 0.27~0.48 |
| Compression | Compression creep (%) | 13.2 | 12.2 | 10.6 |
| creep Test | Permanent distortion (%) | 9.5 | 8.8 | 8.6 |
| Tensile test | Elasticity modulus (MPa) | 440 | 528 | 528 |
| | Yield point strength (MPa) | 8.8 | 10.5 | 10.5 |
| Adhesion test | | Satisfactory | Satisfactory | Satisfactory |

### <Table 5>

**Table 5**

| | | Comparative example 1 | Comparative example 2 | Comparative example 3 |
|---|---|---|---|---|
| Friction/wear Test | Specific wear rate (10⁻⁸×mm³/N•m) | 2.38×10⁶ | 9.14×10³ | 4.59×10³ |
| | Coefficient of friction | 0.22~0.30 | 0.15~0.25 | 0.17~0.19 |
| Compression creep test | Compression creep (%) | 14.0 | 4.0 | 1.3 |
| | Permanent distortion (%) | 10.1 | 2.7 | 1.0 |
| Tensile test | Elasticity modulus (MPa) | 453 | 507 | 578 |
| | Yield point strength (MPa) | 9.8 | 10.7 | 11.8 |
| Adhesion test | | Unsatisfactory | Unsatisfactory | Unsatisfactory |

### <Table 6>

**Table 6**

| | | Working Example 12 | Working Example 13 | Working Example 14 | Comparative example 4 |
|---|---|---|---|---|---|
| Resin composition | Powdered PTFE crosslinked body (Working Example 3) (wt%) | 100 | 50 | 80 | 0 |
| | PTFE powder (M-111) (wt%) | 0 | 50 | 20 | 100 |
| Friction / wear Test | Specific wear rate (10⁻⁸×mm³/N•m) | 1.05×10³ | 4.95×10³ | 1.97×10³ | 1.18×10⁶ |
| | Coefficient of friction | 0.20~0.24 | 0.12~0.19 | 0.13~0.19 | 0.10~0.16 |
| compression creep Test | Compression creep (%) | 1.8 | 2.8 | 1.6 | 5.7 |
| | Permanent distortion | 2.2 | 2.6 | 1.9 | 3.6 |
| Tensile test | Elasticity modulus (MPa) | 743 | 694 | 626 | 469 |
| | Yeld point strength (MPa) | 12.8 | 12.1 | 11.2 | 9.3 |
| Adhesion test | | Satisfactory | Satisfactory | Satisfactory | Unsatisfactory |

### <Table 7>

**Table 7**

| | | Working Example 18 | Working Example 19 |
|---|---|---|---|
| Resin composition | Modified PTFE | Synthesis Example 1 | Synthesis Example 1 |
| | BDHF (Note 1) | 1 | 1 |
| Friction/wear Test | Specific wear rate (10⁻⁸×mm³/N·m) | 1.28×10³ | 5.91×10² |
| | Coefficient of friction | 0.19~0.23 | 0.19~0.22 |
| Compression creep Test | Compression creep (%) | 1.8 | 1.5 |
| | Permanent distortion (%) | 1.8 | 2.0 |
| Tensile test Tensile test | Elasticity modulus (MPa) | 721 | 732 |
| | yield point strength (MPa) | 12.6 | 12.7 |
| Adhesion test | | Satisfactory | Satisfactory |

| | | | |
|---|---|---|---|
| (Note 1) No. of equivalent amino groups based on the carboxyl groups of PFBA. | | | |

As is clear from Tables 1 through 5, the PTFE molded body of the present invention retains the conventional surface characteristics. Moreover, compared with conventional PTFE resins, the PTFE molded body of the present invention has an improved tensile modulus and creep characteristics, and is perceived to undergo deformation with more difficulty.

Furthermore, in Table 5 are described the various collected physical properties of polytetrafluoroethylene that has been crosslinked with ionizing radiation (see Comparative Examples 2 & 3), but there is a problem with the crosslinking treatment method that uses ionizing radiation in that it requires expensive dedicated equipment, and a problem that crosslinking cannot be carried out uniformly over a large surface area or on a powder, and additionally is beset with the problem that the crosslinking portion is biased toward the surface, so that this certainly cannot be said to be a preferred crosslinking treatment method.

In addition, as is clear from Tables 6 and 7, the powdered PTFE crosslinked body that relates to the present invention is perceived to act effectively as a modifying agent for unmodified PTFE.

### INDUSTRIAL APPLICABILITY

The crosslinkable polytetrafluoroethylene composition of matter that relates to the present invention maintains the conventional strength, crystallinity and surface characteristics without any anisotropy or heterogeneity, and can provide a polytetrafluoroethylene resin that is more difficult to deform than conventional PTFE resin, and the powdered polytetrafluoroethylene crosslinked body provided by this crosslinkable polytetrafluoroethylene composition of matter is useful as a modifying material , and the polytetrafluoroethylene molded body is useful as a sliding component .

## Claims

1. A crosslinkable polytetrafluoroethylene composition of matter that contains polytetrafluoroethylene that possesses at least one type of reactive functional group selected from the group consisting of cyano (-CN), carboxyl (-COOH), alkoxycarbonyl (-COOR (where R is a monovalent organic group)) and acid halide (-COX (where X is a halogen atom)) on at least one of the main chain and side chain terminal ends, and a crosslinking agent that reacts with one or a plurality of the reactive functional groups and can form a cyclic structure.

2. The crosslinkable polytetrafluoroethylene composition of matter according to Claim 1, wherein the crosslinking agent is at least one type of crosslinking agent selected from the group consisting of amidoxime crosslinking agent, amidrazone crosslinking agent, aminophenol crosslinking agent, aminothiophenol crosslinking agent and aminophenyl crosslinking agent.

3. The crosslinkable polytetrafluoroethylene composition of matter according to Claim 2, wherein the crosslinking agent is at least one compound selected from the group consisting of:
a compound including at least two crosslinkable functional groups as depicted in Generic Formula (1):
<Structure 1> 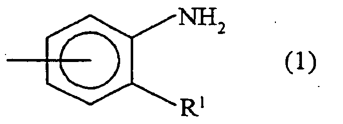 (where in the formula, R¹ is the same or different, and can be -NH₂, -NHR², -OH or -SH, and R² is a fluorine atom or a monovalent organic group);
a compound as depicted in Generic Formula (2)_{:}
<Structure 2> 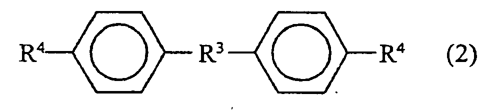 (where in the formula, R³ is an -SO₂-, -O-, -CO-, an alkylene group with from 1 to 6 carbon atoms, a perfluoroalkylene group with from 1 to 10 carbon atoms, or a single bond, and R⁴ is 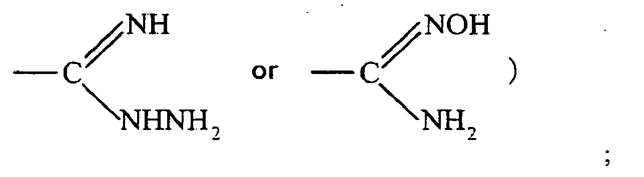
a compound as depicted in Generic Formula (3):
<Structure 3> 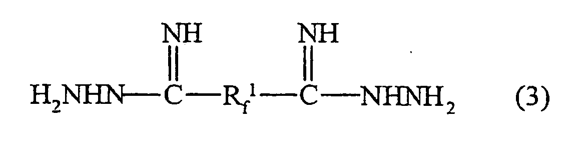 (where in the formula, R_{f}¹ is a perfluoroalkylene group with from 1 to 10 carbon atoms); and
a compound as depicted in Generic Formula (4):
<Structure 4> 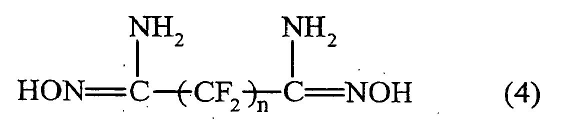 (where in the formula, n is an integer from 1 to 10).

4. The crosslinkable polytetrafluoroethylene composition of matter according to Claim 3, wherein the crosslinking agent is a compound as depicted in Generic Formula (5):
<Structure 5> 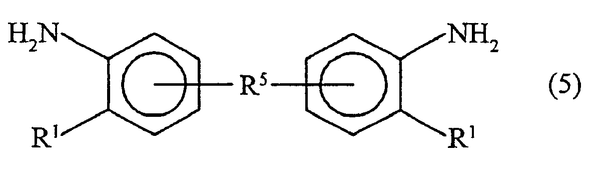 (where in the formula, R¹ is the same as the aforementioned R¹, R⁵ is -SO₂-, -O-, -CO-, an alkylene group with from 1 to 6 carbon atoms, a perfluoroalkylene group with from 1 to 10 carbon atoms, or a single bond, or the group depicted as
<Structure 6>

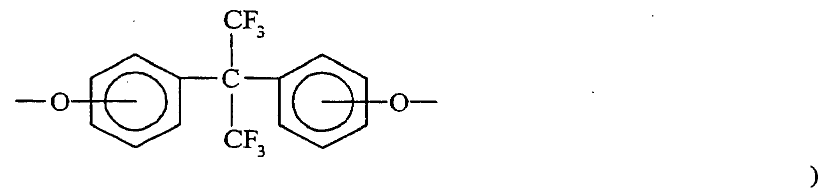

5. A polytetrafluoroethylene molded body obtained through the crosslinking reaction of the crosslinkable polytetrafluoroethylene composition of matter described in any one of Claims 1 through 4.

6. A powdered polytetrafluoroethylene crosslinked body obtained through the crosslinking reaction of the crosslinkable polytetrafluoroethylene composition of matter described in any one of Claims 1 through 4.

7. The polytetrafluoroethylene molded body that is formed by molding the powdered polytetrafluoroethylene crosslinked body described in Claim 6.

8. The resin blend composition of matter that contains the crosslinkable polytetrafluoroethylene composition of matter described in any one of Claims 1 through 4, and a resin or a resin precursor.

9. The resin blend composition of matter described in Claim 8, wherein the resin is at least one fluororesin selected from the group consisting of polytetrafluoroethylene, tetrafluoroethylene-hexafluoropropylene copolymers, tetrafluoroethylene-perfluoro(alkyl vinyl ether) copolymers, and poly(chlorotrifluoroethylene).

10. A resin blend molded body that is formed by molding the resin blend composition of matter described in Claim 8 or Claim 9.

11. The resin blend composition of matter that contains the powdered polytetrafluoroethylene crosslinked body described in Claim 6 and a resin or a resin precursor.

12. The resin blend composition of matter described in Claim 11, wherein the resin is at least one fluororesin selected from the group consisting of polytetrafluoroethylene, tetrafluoroethylene-hexafluoropropylene copolymers, tetrafluoroethylene-perfluoro(alkyl vinyl ether) copolymers, and poly(chlorotrifluoroethylene).

13. A resin blend molded body that is formed by molding the resin blend composition of matter described in Claim 11 or Claim 12.

## Patentansprüche

1. Vernetzbare Polytetrafluorethylenzusammensetzung, die Polytetrafluorethylen, das wenigstens einen Typ von reaktiver funktioneller Gruppe, die ausgewählt ist aus der Gruppe, bestehend aus Cyano (-CN), Carboxyl (-COOH), Alkoxycarbonyl (-COOR (worin R eine einwertige organische Gruppe ist)) und Säurehalogenid (-COX (worin X ein Halogenatom ist)), an wenigstens einem von den terminalen Hauptketten- und Seitenkettenenden besitzt, und ein Vernetzungsmittel, das mit einem oder mehreren der reaktiven funktionellen Gruppen reagiert und eine zyklische Struktur bilden kann, enthält.

2. Vernetzbare Polytetrafluorethylenzusammensetzung nach Anspruch 1, wobei das Vernetzungsmittel wenigstens ein Typ von Vernetzungsmittel ist, der ausgewählt ist aus der Gruppe, bestehend aus Amidoxim-Vernetzungsmittel, Amidrazon-Vernetzungsmittel, Aminophenol-Vernetzungsmittel, Aminothiophenol-Vernetzungsmittel und Aminophenyl-Vernetzungsmittel.

3. Vernetzbare Polytetrafluorethylenzusammensetzung nach Anspruch 2, wobei das Vernetzungsmittel wenigstens eine Verbindung ist, die ausgewählt ist aus der Gruppe, bestehend aus:
einer Verbindung, die wenigstens zwei vernetzbare funktionelle Gruppen einschließt, wie dargestellt in der generischen Formel (1):
<Struktur 1> 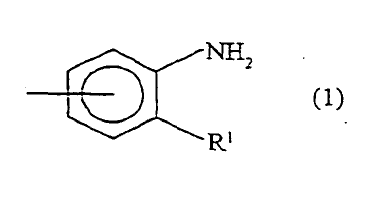 (wobei in der Formel R¹ identisch oder verschieden ist und -NH₂, -NHR², -OH oder -SH sein kann und R² ein Fluoratom oder eine einwertige organische Gruppe ist);
einer Verbindung, wie dargestellt in der generischen Formel (2):
<Struktur 2> 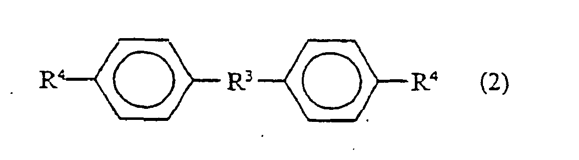 (wobei in der Formel R³ ein -SO₂-, -O-, -CO-, eine Alkylengruppe mit von 1 bis 6 Kohlenstoffatomen, eine Perfluoralkylengruppe mit von 1 bis 10 Kohlenstoffatomen oder eine Einfachbindung ist und R⁴ 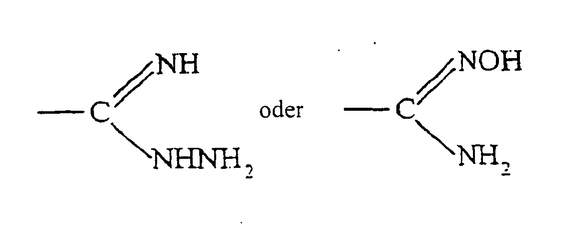 ist);
einer Verbindung, wie dargestellt in der generischen Formel (3):
<Struktur 3> 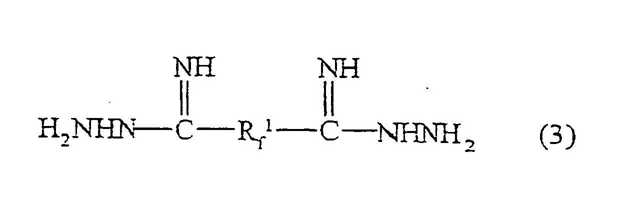 (wobei in der Formel R_{f}¹ eine Perfluoralkylengruppe mit von 1 bis 10 Kohlenstoffatomen ist); und
einer Verbindung, wie dargestellt in der generischen Formel (4):
<Struktur 4> 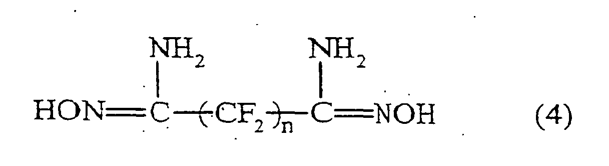 (wobei in der Formel n eine ganze Zahl von 1 bis 10 ist).

4. Vernetzbare Polytetrafluorethylenzusammensetzung nach Anspruch 3, wobei das Vernetzungsmittel eine Verbindung ist, wie dargestellt in der generischen Formel (5):
<Struktur 5> 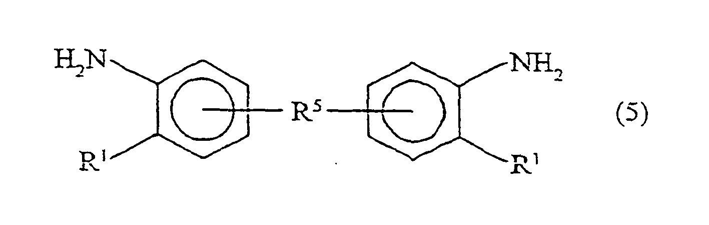 (wobei in der Formel R¹ identisch ist mit dem vorgenannten R¹, R⁵ -SO₂- -O-, -CO-, eine Alkylengruppe mit von 1 bis 6 Kohlenstoffatomen, eine Perfluoralkylengruppe mit von 1 bis 10 Kohlenstoffatomen oder eine Einfachbindung ist, oder die Gruppe, dargestellt als
<Struktur 6>

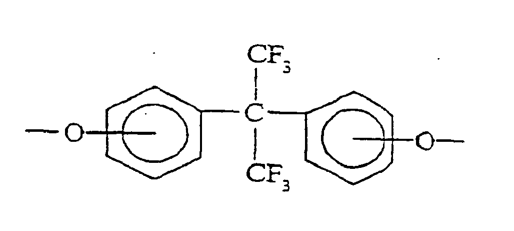

5. Polytetrafluorethylenformkörper, erhalten durch die Vernetzungsreaktion der vernetzbaren Polytetrafluorethylenzusammensetzung nach einem der Ansprüche 1 bis 4.

6. Pulverisierte Masse aus vernetztem Polytetrafluorethylen, erhalten durch die Vernetzungsreaktion der vernetzbaren Polytetrafluorethylenzusammensetzung nach einem der Ansprüche 1 bis 4.

7. Poyltetrafluorethylenformkörper, der gebildet ist durch Ausformen der pulverisierten Masse aus vernetztem Polytetrafluorethylen nach Anspruch 6.

8. Harzgemischzusammensetzung, die eine vernetzbare Polytetrafluorethylenzusammensetzung nach einem der Ansprüche 1 bis 4 und ein Harz oder eine Harzvorstufe enthält.

9. Harzgemischzusammensetzung nach Anspruch 8, wobei das Harz wenigstens ein Fluorharz ist, das ausgewählt ist aus der Gruppe, bestehend aus Polytetrafluorethylen, Tetrafluorethylen-Hexafluorpropylen-Copolymeren, Tetrafluorethylen-Perfluor(alkylvinylether)-Copolymeren und Poly(chlortrifluorethylen).

10. Harzgemischformkörper, der gebildet ist durch Ausformen der Harzgemischzusammensetzung nach Anspruch 8 oder Anspruch 9.

11. Harzgemischzusammensetzung, die die pulverisierte Masse aus vernetztem Polytetrafluorethylen nach Anspruch 6 und eine Harz oder eine Harzvorstufe enthält.

12. Harzgemischzusammensetzung nach Anspruch 11, wobei das Harz wenigstens ein Fluorharz ist, das ausgewählt ist aus der Gruppe, bestehend aus Polytetrafluorethylen, Tetrafluorethylen-Hexafluorpropylen-Copolymeren, Tetrafluorethylen-Perfluor(alkylvinylether)-Copolymeren und Poly(chlortrifluorethylen).

13. Harzgemischformkörper, der gebildet ist durch Ausformen der Harzgemischzusammensetzung nach Anspruch 11 oder Anspruch 12.

## Revendications

1. Composition de polyfluoroéthylène réticulable de matériau renfermant du polytétrafluoroéthylène qui possède au moins un type de groupe fonctionnel réactif sélectionné parmi le groupe constitué de cyano (-CN), carboxyle (-COOH), alkoxycarbonyle (-COOR (où R désigne un groupe organique monovalent) et d'halogénures acides (-COX) (où X désigne un atome d'alogène) sur au moins l'une de la chaîne principale et des extrémités terminales de la chaîne et un agent de réticulation qui réagit à une ou à une multiplicité des groupes fonctionnels réactifs et est apte à former une structure cyclique.

2. Composition de polytétrafluoroéthylène réticulable de matériau selon la Revendication 1, dans laquelle l'agent de réticulation est au moins un type d'agent de réticulation sélectionné parmi le groupe constitué d'un agent de réticulation d'amidoxime, d'un agent de réticulation d'amidrazone, d'un agent de réticulation d'aminophénol, d'un agent de réticulation d'aminothiophénol et d'un agent de réticulation d'aminophényle.

3. Composition de polytétrafluoroéthylène réticulable de matériau selon la Revendication 2, dans lequel l'agent de réticulation est au moins un d'un composé sélectionné parmi le groupe constitué de :
un composé renfermant au moins deux groupes fonctionnels réticulables tels que décrits dans la Formule générique (1) ;
<Structure 1> 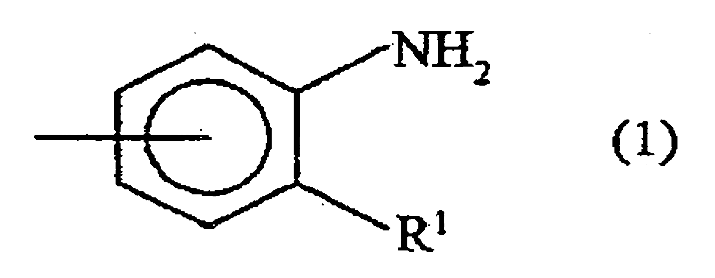 (où dans la Formule, R¹ est le même ou différent et peut être -NH₂, -NHR², -OH ou -SH, et R² désigne un atome de fluorine ou un groupe organique monovalent) ;
un composé tel que décrit dans la Formule générique (2) :
<Structure 2> 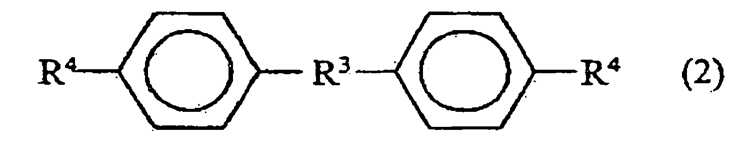 (où dans la formule, R³ désigne un -SO₂-, -O-, -CO-, un groupe alkylène renfermant de 1 à 6 atomes de carbone, un groupe perfluoroalkylène renfermant de 1 à 10 atomes de carbone ou une liaison unique et R représente 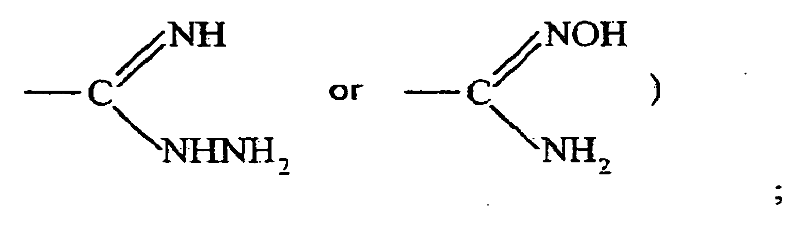
un composé tel que décrit dans la Formule générique (3) :
<Structure 3> 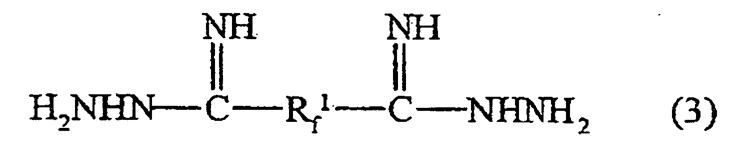 (où dans la formule, R_{f}¹ désigne un groupe perfluoroalkylène renfermant 1 à 10 atomes de carbone) ; et
un composé tel que décrit dans la Formule générique (4) :
<Structure 4> 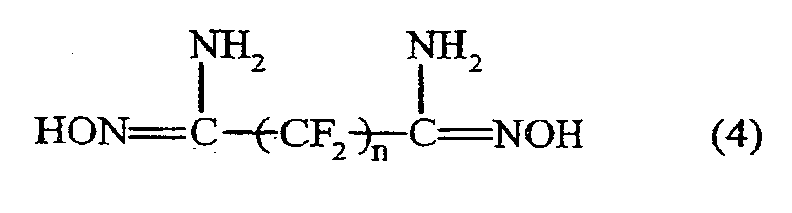 (où dans la formule, n désigne un nombre entier de 1 à 10).

4. Composition de polytétrafluoroéthylène réticulable de matériau selon la Revendication 3, dans lequel l'agent de réticulation est un composé tel que décrit dans la Formule générique (5) :
<Structure 5> 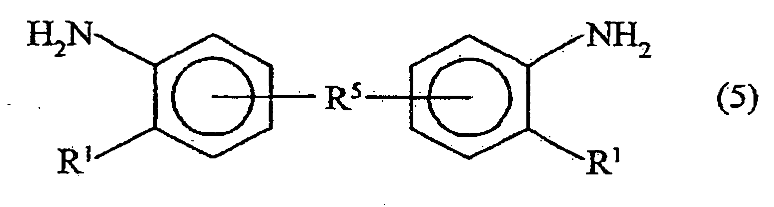 (où dans la formule, R¹ désigne le même que le R¹ susmentionné, R⁵ désigne -SO₂-, -O-, - CO-, un groupe alkylène renfermant de 1 à 6 atomes de carbone, un groupe perfluoroalkylène renfermant de 1 à 10 atomes de carbone, ou une liaison unique, ou le groupe tel que décrit dans la
<Structure 6>

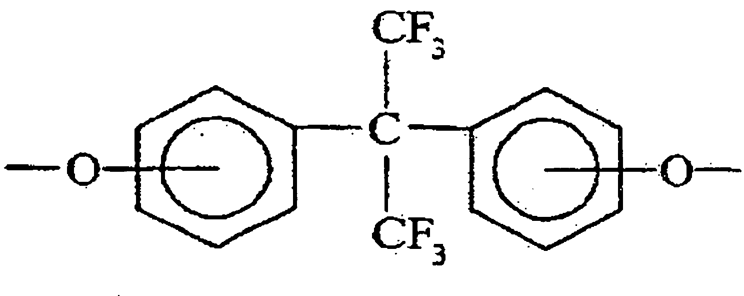

5. Corps moulé de polytétrafluorothylène obtenu par réaction de réticulation de la composition de polytétrafluoroéthylène réticulable de matériau décrite dans l'une quelconque des Revendications de 1 à 4.

6. Corps réticulé de polytétrafluorothylène en poudre obtenu par la réaction de réticulation de la composition de polytétrafluorothylène réticulable de matériau décrite dans l'une quelconque des Revendications 1 à 4.

7. Corps moulé de polytétrafluorothylène qui est formé en moulant le corps réticulé de polytétrafluorothylène en poudre décrit dans la revendication 6.

8. Composition de mélange de résines de matériau qui renferme la composition de polytétrafluorothylène réticulable de matériau décrite dans l'une quelconque des Revendications de 1 à 4 et une résine ou un précurseur de résine.

9. Composition de mélange de résines de matériau décrite dans la Revendication 8, dans laquelle la résine est au moins une fluorésine sélectionnée parmi le groupe constitué de polytétrafluorothylène, de copolymères de tétrafluoroéthylène-hexafluoropropylène, de copolymères de tétrafluoroéthylène-perfluoro(éther d'alkyle et de vinyle) et de poly(chlorotrifluoroéthylène).

10. Corps moulé d'un mélange de résines qui est formé en moulant la composition de mélange de résine de matériau décrite dans la Revendication 8 ou la Revendication 9.

11. Composition de mélange de résines de matériau qui contient le corps réticulé de polytétrafluorothylène en poudre décrit dans la Revendication 6 et une résine ou un précurseur de résine.

12. Composition de mélange de résines de matériau décrite dans la Revendication 11, dans laquelle la résine est au moins une fluororésine sélectionnée parmi le groupe constitué de polytétrafluorothylène, de copolymères de tétrafluoroéthylène-hexafluoropropylène, de copolymères de tétrafluoroéthylène-perfluoro(éther d'alkyle et de vinyle) et de poly(chlorotrifluoroéthylène).

13. Corps moulé de mélange de résines qui est formé en moulant la composition de mélange de résines de matériau décrite dans la Revendication 11 ou la Revendication 12.
